# EUROPEAN PATENT SPECIFICATION

(11) **EP 1 276 106 B1**
(45) Date of publication and mention of the grant of the patent: **23.11.2005**
(21) Application number: 02015287.2
(22) Date of filing: 09.07.2002
(51) Int. Cl.: G11B 20/00, G06F 1/00

(54) **Digital work protection system, recording medium apparatus, transmission apparatus, and playback apparatus**
System zum Schutz digitaler Inhalte, Aufzeichnungsgerät, Übertragungsgerät und Wiedergabegerät
Système de protection de contenu numérique, appareil d'enregistrement, appareil de transmission et appareil de reproduction

(30) Priority: 09.07.2001 JP 2001208533
(43) Date of publication of application: 15.01.2003
(60) Divisional application: 05020246.4
(73) Proprietor: MATSUSHITA ELECTRIC INDUSTRIAL CO., LTD., Kadoma-shi, Osaka 571-8501 (JP)
(72) Inventor: Harada, Shunji, Osaka-fu 557-0045 (JP); Futa, Yuichi, Osaka-shi, Osaka-fu 534-0002 (JP); Miyazaki, Masaya, Osaka-fu, 563-0022 (JP); Sekibe, Tsutomu, Osaka-fu, 573-0047 (JP); Nakanishi, Yoshiaki, Suginami-ku, Tokyo-to 166-0014 (JP); Matsuzaki, Natsume, Osaka-fu 562-0023 (JP)
(74) Representative: Grünecker, Kinkeldey, Stockmair & Schwanhäusser Anwaltssozietät

(56) References cited:
- EP-A- 0 561 685
- EP-A- 0 994 475
- EP-A- 1 018 733
- EP-A- 1 050 887
- EP-A- 1 054 398
- EP-A- 1 074 906
- WO-A-01/16932
- US-A- 6 144 743

## Description

### BACKGROUND OF THE INVENTION

### (1) Field of the Invention

The present invention relates to a technique for protecting copyright of digital works, and in particular to a copyright protection technique used in playback and recording of digital works.

### (2) Description of the Related Art

In recent years it has become common for digital works such as documents, music, video, and computer programs to be distributed through networks such as the Internet. This enables users to easily extract various works via the network, record the extracted works on a recording medium, and then play back the works.

However, while there is an advantage that digital works can be easily copied is this way, there is also a problem that the rights of the copyright holder are easily infringed.

Conventional music distribution systems take, for example, the following measures to deal with this problem.

(1) The content provision server stores encrypted content, an encrypted title key that has been used in encrypting the content, and encrypted usage condition data for the content. The encrypted content is content such as music that has been encrypted with the title key. The title key is unique to that content. In response to a request from a user, the content provision server encrypts the title key and the usage condition data that correspond to the content to be transmitted, with a user unique key that is unique to the user, to generate an encrypted title key and encrypted usage condition data.

The user's computer obtains the encrypted content, the encrypted title key and the encrypted usage condition data according to user instructions, from the content provision server to which it is connected via a network, and stores the obtained encrypted content and data.

(2) The computer stores in advance the user unique key. A recording medium for recording content in is inserted in the computer by the user. The recording medium pre-stores a recording medium unique key that is unique to the recording medium.

The computer, according to instructions from the user, decrypts the stored encrypted title key and encrypted usage condition data, using the user unique key, to temporarily generate a decrypted title key and decrypted usage condition data. Next, the computer securely reads the medium unique key from the recording medium, and encrypts the decrypted title key and decrypted usage condition data using the read medium unique key, to generate a re-encrypted title key and re-encrypted usage condition data, and records the encrypted content, the re-encrypted title key, and the re-encrypted usage condition data in the recording medium. After recording these in the recording medium, the computer deletes the temporarily generate decrypted title key and decrypted usage condition data.

(3) The user removes the recording medium from the computer and inserts it in a playback apparatus. The playback apparatus securely reads the recording medium unique key from the recording medium, and reads the encrypted content, the re-encrypted title key, and the re-encrypted usage condition data from the recording medium. Then, the playback apparatus decrypts the re-encrypted title key and the re-encrypted usage condition data using the recording medium unique key, to generate the title key and the usage condition data. Then, the playback apparatus decrypts the encrypted content using the generated title key, to generate the content, and plays back the generated content within the range permitted by the usage condition data.

In such a system, since the encrypted title key is decrypted and then re-encrypted (hereinafter "encryption conversion") in the computer, the decrypted title key is temporarily generated and stored by the computer. This gives rise to a problem that it is technically possible for a user with ill intent to discover the title key and use this title key to decrypt the encrypted content dishonestly (this act is referred to hereinafter as hacking).

One conventional technique to solve this problem is to incorporate unnecessary instructions and branch instructions into the computer's program in advance to make hacking difficult. However, this increases the size of the program, and slows the performance of the computer.

EP 1 018 733 A1 describes a data transmit/receive unit that receives encrypted digital data distributed through an electronic music distribution system and records the digital data on a primary recording medium. Digital data have been encrypted in different encryption systems according to the distributors, and include attribute information indicating the encryption systems. The encryption system of digital data that has been extracted by a data extraction unit is judged by a judging unit and decrypted by an appropriate decryption unit. An inherent information obtaining unit obtains the identification information of a secondary recording medium or a playback apparatus according to whether the secondary recording medium can be removable from the playback apparatus. An encryption system designation unit selects one out of a plurality of encryption units according to the obtained identification information. The selected encryption unit creates an encryption key according to the identification information and encrypts the digital data. A recording unit records the digital data on the secondary recording medium. The data are recorded on the medium in encrypted form together with an encrypted key. An encryption key is created according to the identification information, and digital data re-encrypted with the encryption key is recorded on a DVD-RAM disc. As a result, even if a user with a malicious intent makes a copy of the content of the DVD-RAM disc on another recording medium using a tool for bit copy and tries to play back the copied data on other recording medium, the copied data cannot be normally decrypted since the information for decryption key of the other recording medium is different from that of the DVD-RAM disc. In this way, the copyright of the music data is protected.

EP 1 050 887 A1 describes a semiconductor memory card comprising a control IC, a flash memory, and a ROM. The ROM holds information such as a medium ID unique to the semiconductor memory card. The flash memory includes an authentication memory and a non-authentication memory. The authentication memory can be accessed only by external devices, which have been affirmatively authenticated. The non-authentication memory can be accessed by external devices whether the external devices have been affirmatively authenticated or not. The control IC includes control units and, an authentication unit and the like. The control units and control accesses to the authentication memory and the non-authentication memory, respectively. The authentication unit executes a mutual authentication with an external device. For authentication a master key is used.

### SUMMARY OF THE INVENTION

In order to solve the above-described problem, the object of the present invention is to provide a digital work protection system, recording medium apparatus, transmission apparatus and playback apparatus that make hacking difficult without increasing the size of the computer program and without slowing the performance of the computer.

Aspects of the present invention are defined in the appended claims.

### BRIEF DESCRIPTION OF THE DRAWINGS

These and other objects, advantages and features of the invention will become apparent form the following description thereof taken in conjunction with the accompanying drawings which illustrate a specific embodiment of the invention.

In the drawings:
Fig. 1 is a block drawing showing the structure of a digital work protection system 100;
Fig. 2 is a block drawing showing the structure of a content distribution server apparatus 200 and a memory card 400;
Fig. 3 is a block drawing showing the structure of the memory card 400;
Fig. 4 is a block drawing showing the structure of a personal computer 300;
Fig. 5 is a block drawing showing the structure of the memory card 400 and a headphone stereo 500;
Fig. 6 shows a distribution data format structure;
Fig. 7 shows a recording data format structure;
Fig. 8 is a flowchart showing operations when writing to the memory card 400, and continues in Fig. 9;
Fig. 9 is a flowchart showing operations when writing to the memory card 400, and continues in Fig. 10;
Fig. 10 is a flowchart showing operations when writing to the memory card 400, is a continuation of Fig. 9;
Fig. 11 is a flowchart showing operations when reading from the memory card 400, and continues in Fig. 12;
Fig. 12 is a flowchart showing operations when reading from the memory card 400, and is a continuation of Fig. 11;

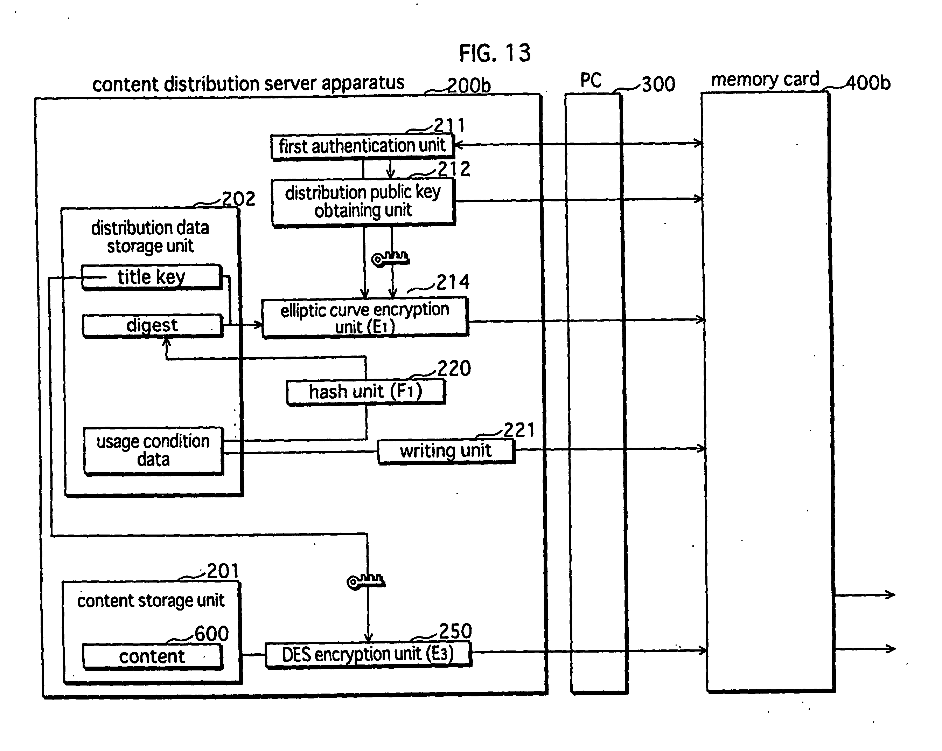

Fig. 13 is a block drawing showing the structure of a content distribution server 200b and a memory card 400b;
Fig. 14 is a block drawing showing the structure of the memory card 400b;
Fig. 15 is a block drawing showing the structure of the memory card 400b and the headphone stereo 500;
Fig. 16 shows a distribution data format structure;
Fig. 17 shows a recording data format structure;
Fig. 18 is a flowchart showing operations when writing to the memory card 400b, and continues in Fig. 19;
Fig. 19 is a flowchart showing operations when writing to the memory card 400b, and continues in Fig. 20;
Fig. 20 is a flowchart showing operations when writing to the memory card 400b, and is a continuation of Fig. 19;
Fig. 21 is a block drawing of the structure of a content distribution server 200c and a memory card 400c; and
Fig.22 is a flowchart showing operations in a digital work protection system 100c of a computer incorporated in a tamper-proof module unit 410c in the memory card 400c, and updating of data.

### DESCRIPTION OF THE PREFERRED EMBODIMENT

### 1. First Embodiment

The following describes a digital work protection system 100 as a an embodiment of the present invention.

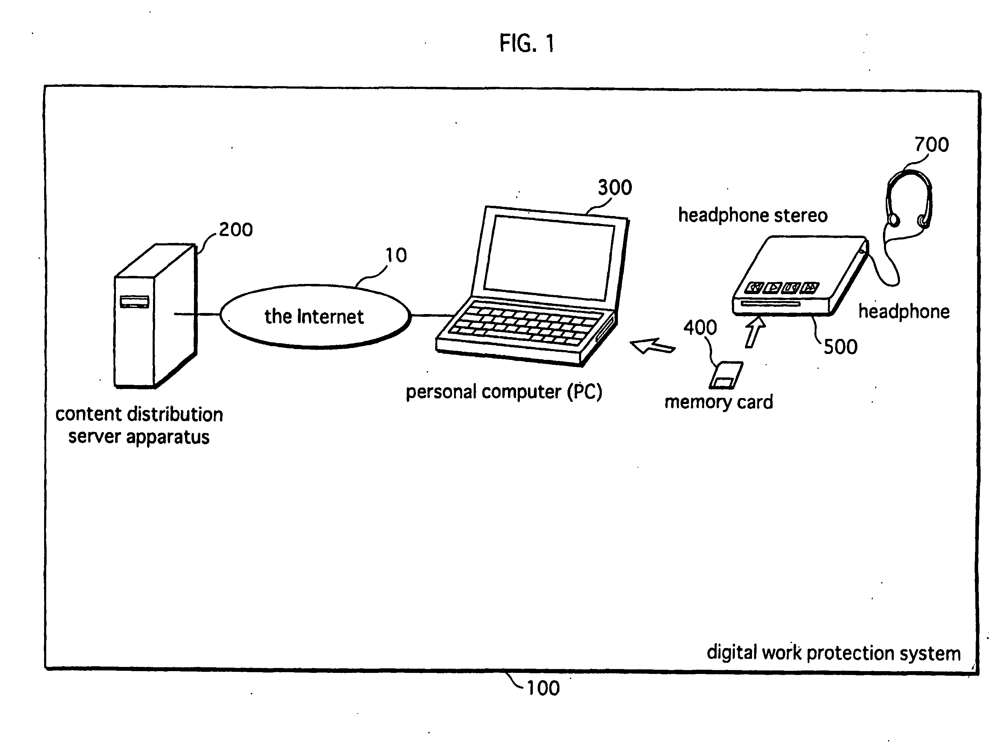

The digital work protection system 100, as shown in Fig. 1, is composed of a content distribution server apparatus 200, a personal computer (PC) 300, a portable memory card 400, and a headphone stereo 500. The PC 300 is connected to the content distribution server apparatus 200 via the Internet 10.

The user inserts the memory card 400 into the PC 300. The PC 300, according to instructions from the user, obtains encrypted content from the content distribution server 200, and writes the obtained content to the memory card 400. Next, the user removes the memory card 400 from the PC 300, and inserts the memory card 400 into the headphone stereo 500. The headphone stereo 500 decrypts the encrypted content recorded in the memory card 400, to generate content which it plays back and then outputs to headphones 700.

This enables the user to enjoy the played back content. 1.1 Structure of the content distribution server apparatus 200

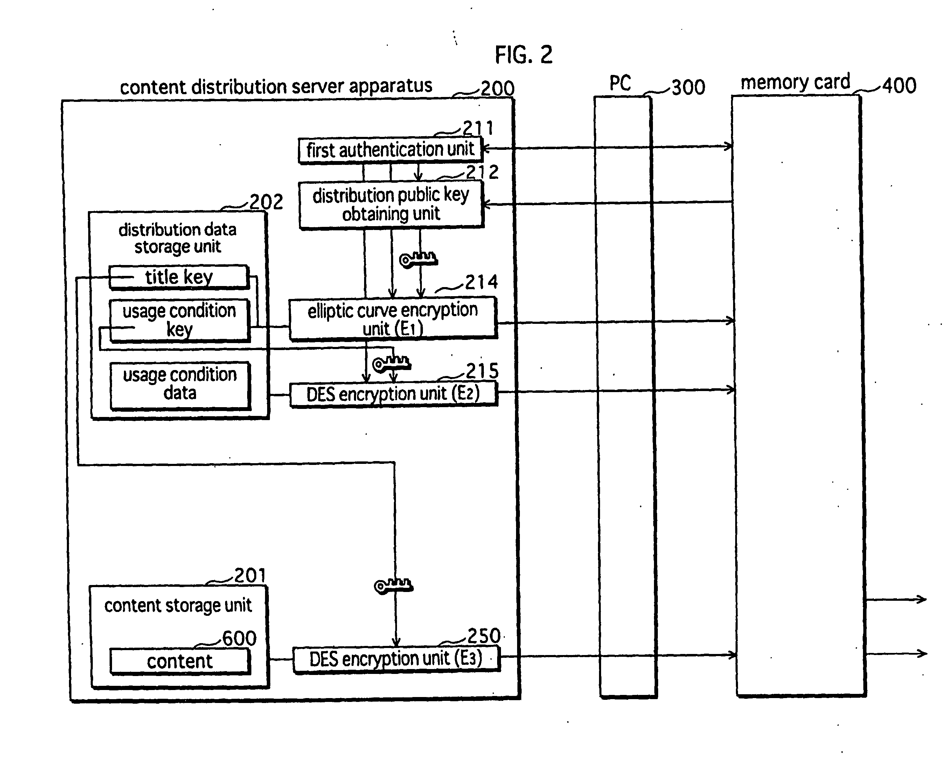

The content distribution server apparatus 200, as shown in Fig. 2, is composed of a content storage unit 201, a distribution data storage unit 202, a first authentication unit 211, a distribution public key obtaining unit 212, and elliptic curve encryption unit 214, a DES encryption unit 215, and a DES encryption unit 250.

Specifically, the content distribution server apparatus 200 is a computer system composed of a microprocessor, a RAM (random access memory), a ROM (read only memory), a hard disk unit, a LAN (local area network) connection unit, a display unit, a keyboard, a mouse, and so on. Computer programs are stored in the RAM or the hard disk unit. The content distribution server apparatus 200 achieves its functions by the microprocessor operating according to the computer programs.

### (1) Content storage unit 201

Specifically, the content storage unit 201 is composed of a hard disk unit, and stores in advance content 600. Here, the content 600 is a digital work such as music, a movie, an electronic book, or a game program.

### (2) Distribution data storage unit 202

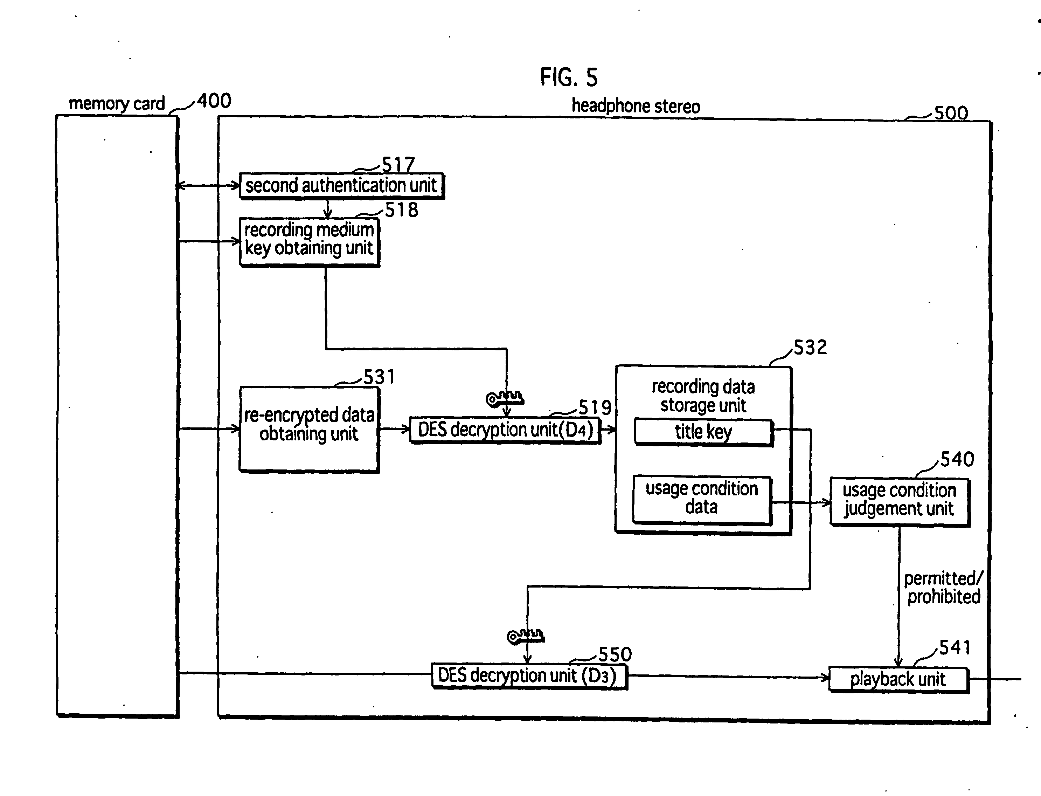

Specifically, the distribution data storage unit 202 is composed of a hard disk, and, as shown in Fig. 5, stores in advance a title key, a usage condition key, and usage condition data, in the stated order. The title key, the usage condition key, and the usage condition data correspond to the content 600 stored in the content storage unit 201.

The title key is a random number generated for the particular content, and is 56 bits in length.

The usage condition key is a random number generated for the particular usage conditions, and is 56 bits in length.

The usage condition data is composed of playback count information, playback period information, and playback accumulated time information.

The playback count information is 16 bits in length, and limits the number of times that the user is able to play back the content stored corresponding to the usage condition data to a total value. For example, if the playback count information is "10", the user is permitted to play back the content a maximum of ten times. If "FFFF" (hexadecimal) is specified as the playback count information, playback is not limited.

The playback period information is 64 bits in length, and limits when the user is able to play back the content stored corresponding to the usage condition data. The playback period information is composed of a playback permission start date/time that shows a date and time at which the playback period starts, and a playback permission end date/time that shows a date and time at which the playback period ends. The user is only permitted to play back the content within the period from the playback permission start date/time to the playback permission end date/time. The user may play back the content any number of times during this period.

Here, when both playback period information and playback count information are specified, the content can no longer be played back when either the permitted period has finished or after the content has been played back the permitted number of times.

The playback accumulated time information limits the length of time that the user is able to play back the content stored corresponding to the usage condition data to a total value. For example, if the playback accumulated time information is "10 hours", the user is permitted to play back the content as long as the accumulated value of the playback time is within 10 hours. Once the accumulated value exceeds 10 hours, playback is prohibited.

Note that although here the usage condition data is composed of playback count information, playback period information and playback accumulated time information, it is possible for the usage condition data to be composed of all, any two, or any one of the stated three types of information.

### (3) First authentication unit 211

The first authentication unit 211 performs challenge-response type mutual device authentication via the Internet 10 and the PC 300 with a first authentication unit 411 (described later) of the memory card 400. Specifically, the first authentication unit 211 performs authentication of the first authentication unit 411, and then is authenticated by the first authentication unit 411. Mutual device authentication is considered to have succeed only when both authentications succeed. Note that as challenge response type mutual device authentication is commonly known, a description thereof is omitted here.

When both authentications succeed, the first authentication unit 211 outputs authentication success information showing that authentication has succeeded to the distribution public key obtaining unit 212, the elliptic curve encryption unit 214, and the DES authentication unit 215.

When authentication fails, the first authentication unit 211 aborts processing. Consequently, the content stored by the content distribution server apparatus 200 is not output to the memory card 400.

### (4) Distribution public key obtaining unit 212

The distribution public key obtaining unit receives the authentication success information from the first authentication unit 211.

On receiving the authentication success information, the distribution public key obtaining unit 212 securely receives, via the Internet 10 and the PC 300, the distribution public key from a distribution public key storage unit 412 (described later) in the memory card 400, and outputs the received distribution public key to the elliptic curve encryption unit 214.

### (5) Elliptic curve encryption unit 214

The elliptic curve encryption unit 214 receives the authentication success information from the first authentication unit 211.

On receiving the authentication success information, the elliptic curve encryption unit 214 receives the distribution public key from the distribution public key obtaining unit 212, and reads the title key and the usage condition key from the distribution data storage unit 202. Then, the elliptic curve encryption unit 214 encrypts combined information (information combining the title key and the usage condition key) by applying an encryption algorithm E1 according to an elliptic curve encryption method using the received distribution public key, to generate encrypted combined information. Then, the elliptic curve encryption unit 214 outputs the generated encrypted combined information via the Internet 10 and the PC 300 to an elliptic curve decryption unit 414 (described later) in the memory card 400.

Note that elliptic curve encryption is described in detail in *"Ango Riron no Kiso" ("Cryptography Theory Fundamentals")*, Douglas R. Stinson, Kyoritsu Shuppan Co. Ltd., 1996.

Note also that the blocks in Fig. 2 are connected to each other by connection lines. Here, connection lines indicate paths along which signals, information, and the like are conveyed. Among the plurality of connection lines connected to the block showing the elliptic curve encryption unit 214, the connection line on which a picture of a key is shown indicates the path along which information is conveyed to the elliptic curve encryption unit 214 as a key. This is the same for the DES encryption unit 215 , and also the same in other drawings.

### (6) DES encryption unit 215

The DES encryption unit 215 receives the authentication success information from the first authentication unit 211.

On receiving the authentication success information, the DES encryption unit 215 reads the usage condition key and the usage condition data from the distribution data storage unit 202. Then, the DES encryption unit 215 encrypts the read usage condition data by applying an encryption algorithm E2 according to DES (Data Encryption Standard) using the read usage condition key, to generate encrypted usage condition data. The DES encryption unit 215 outputs the generated encrypted usage condition data via the Internet 10 and the PC 300 to a DES decryption unit 415 (described later) in the memory card 400.

### (7) DES encryption unit 250

The DES encryption unit 250 reads the title key from the distribution data storage unit 202, and reads the content 600 from the content storage unit 201. Then, the DES encryption unit 250 encrypts the read content by applying an encryption algorithm E3 according to DES using the read title key, to generate encrypted content. The DES encryption unit 250 writes the generated encrypted content to a first storage area 432 (described later) in an information storage unit 430(described later) in the memory card 400, via the Internet 10 and the PC 300.

### 1.2 Structure of the PC 300

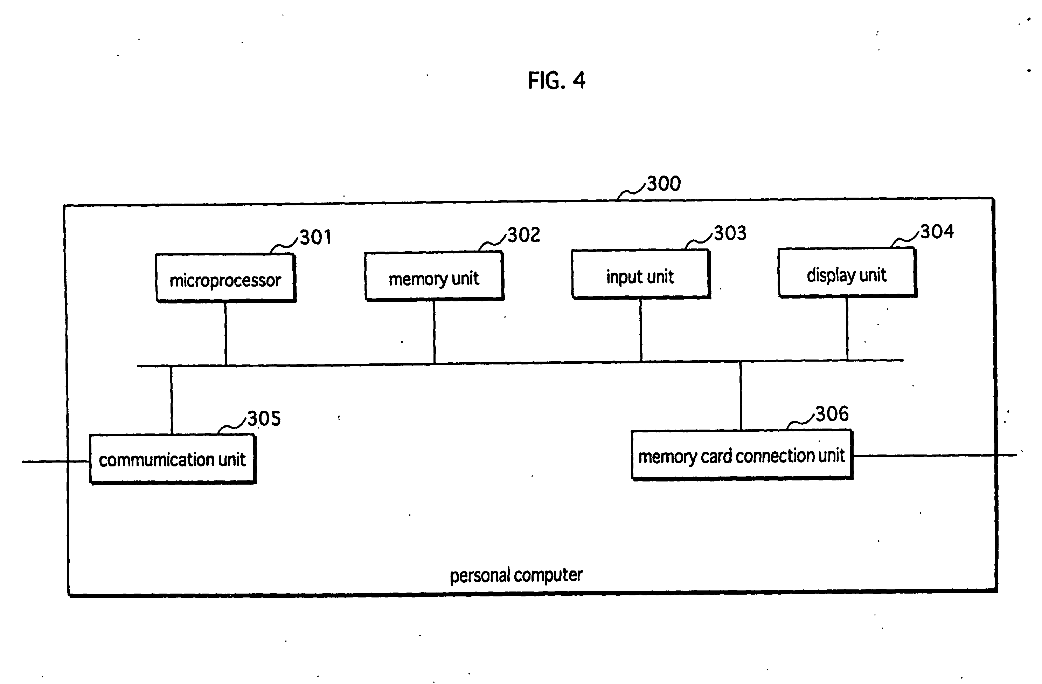

As shown in Fig. 4, the PC 300 is a computer system that includes a microprocessor 301, a memory unit 302 that is a ROM, a RAM, a hard disk, or the like, an input unit 303 that is a keyboard, a mouse or the like, a display unit 304 that is a display or the like, a communication unit 305 that communicates with external apparatuses via the Internet 10, and a memory card connection unit 306 that connects with the memory card 400. Computer programs are stored in the memory unit 302. The PC 300 achieves its functions according to operations of the microprocessor following the computer programs.

### 1.3 Structure of the memory card 400

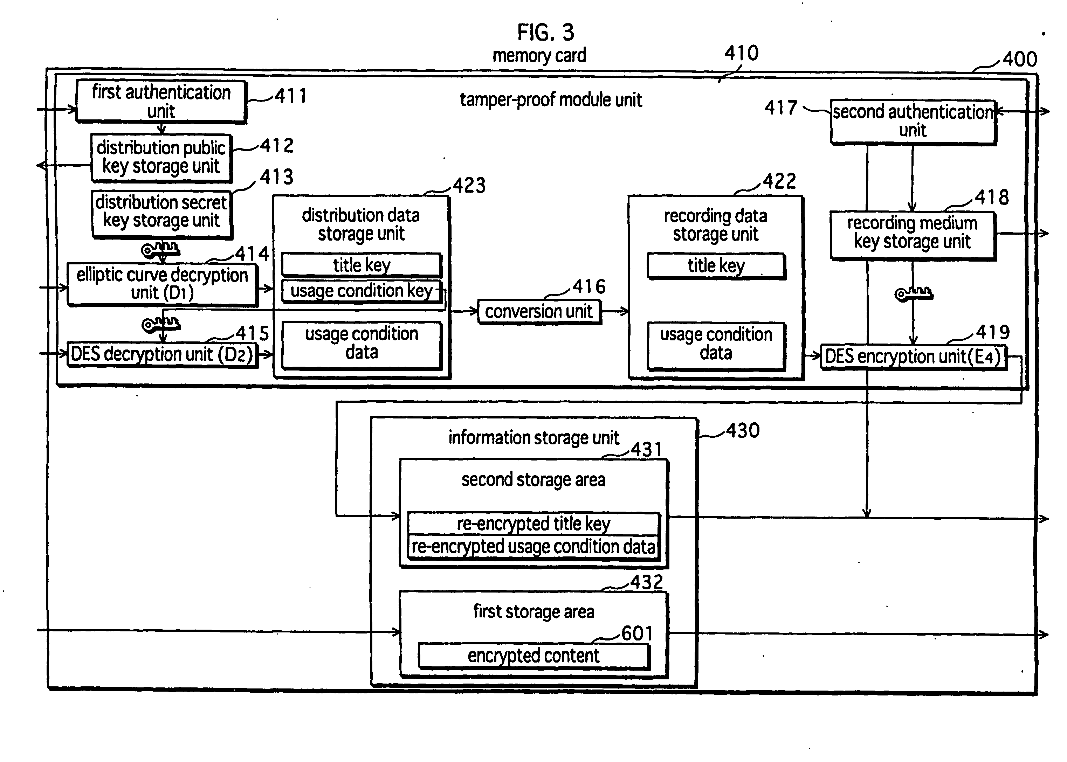

As shown in Fig. 3, the memory card 400 is composed of a tamper-proof module unit 410 and an information storage unit 430. The tamper-proof module unit 410 includes the first authentication unit 411, the distribution public key storage unit 412, a distribution secret key storage unit 413, the elliptic curve decryption unit 414, the DES decryption unit 415, a conversion unit 416, a second authentication unit 417, a recording medium apparatus key storage unit 418, a DES encryption unit 419, a distribution data storage unit 423, and a recording data storage unit 422. The information storage unit 430 includes the first storage area 432 and a second storage area 431. Here, the tamper-proof module unit 410 is composed of tamper-proof hardware, however a combination of tamper-proof hardware and tamper-proof software is also possible.

Furthermore, the tamper-proof module unit 410 is specifically composed of a microprocessor, a ROM, a RAM and so on. The RAM stores computer programs. The tamper-proof module unit 410 achieves its functions according to the microprocessor operating following the computer programs.

### (1) Distribution secret key storage unit 413

The distribution secret key storage unit 413 stores in advance a distribution secret key that is data of 160 bits in length.

### (2) Distribution public key storage unit 412

The distribution public key storage unit 412 stores in advance a distribution public key that is data of 320 bits in length. The distribution public key is generated by applying a public key generation algorithm according to the elliptic curve encryption method using the distribution secret key stored in the distribution secret key storage unit 413.

The distribution public key storage unit 412 receives the authentication success information from the first authentication unit 411.

On receiving the authentication success information, the distribution public key storage unit 412, in response to a request from the distribution public key obtaining unit 212 in the content distribution server apparatus 200, reads the distribution public key that it stores, and outputs the read distribution public key to the content distribution server apparatus 200 via the PC 300 and the Internet 10.

### (3) Recording medium apparatus key storage unit 418

The recording medium apparatus key storage unit 418 stores in advance a recording medium apparatus key that is unique to the memory card 400 and that is data of 56 bits in length.

### (4) Distribution data storage unit 423

The distribution data storage unit 423 has areas for storing each of the title key, the usage condition key, and the usage condition data.

### (5) Recording data storage unit 422

The recording data storage unit 422 has areas for storing each of the title key and the usage condition data.

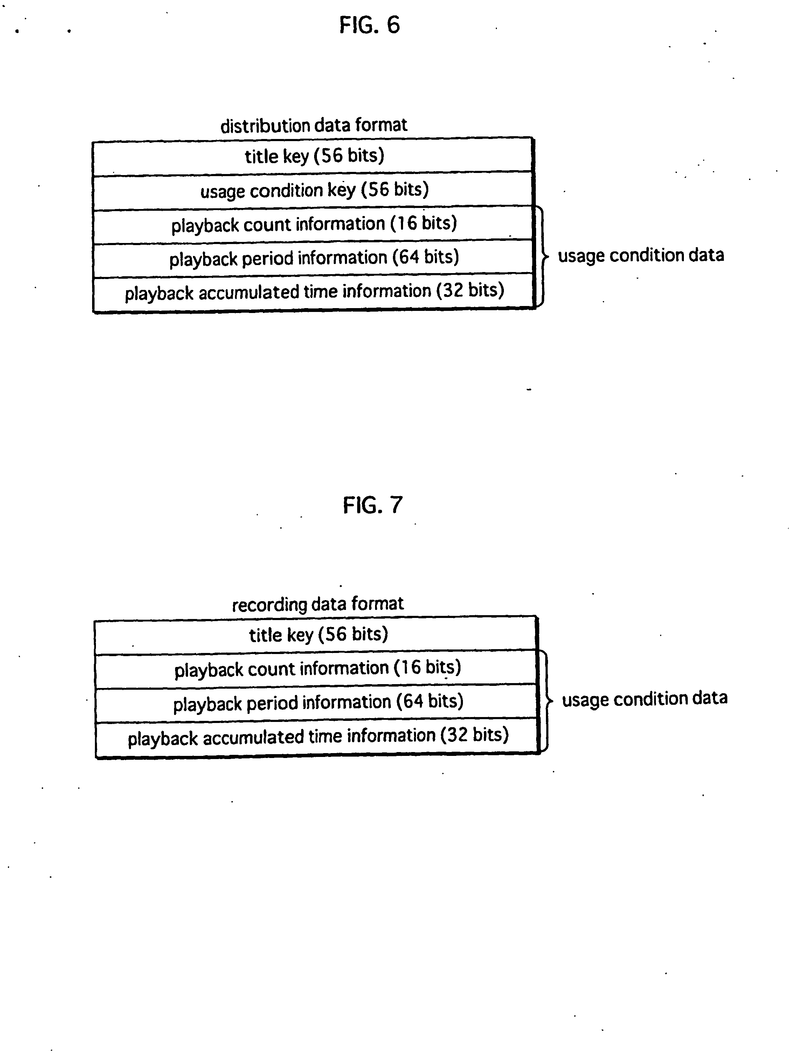

The format of the title key and the usage condition data, which are stored arranged in the stated order in the recording data storage unit 422, are shown in Fig. 7.

### (6) First storage area 432

The first storage area 432 has an area for storing encrypted content which it receives via the Internet 10 and the PC 300.

### (7) Second storage area 431

The second storage area 431 has areas for storing each of a re-encrypted title key and re-encrypted usage condition data.

The second storage area 431 receives the authentication success information from the second authentication unit 417. On receiving the authentication success information, the first authentication unit 431 reads and then outputs the re-encrypted title key and the re-encrypted usage condition information.

### (8) First authentication unit 411

The first authentication unit 411 performs challenge-response type mutual device authentication with the first authentication unit 211 of the content distribution server apparatus 200 via the PC 300 and the Internet 10. Specifically, the first authentication unit 411 is authenticated by the first authentication unit 211. Then, the first authentication unit 411 performs authentication of the first authentication unit 211. Mutual device authentication is considered to have succeed only when both authentications succeed.

When both authentications succeed, the first authentication unit 411 outputs authentication success information showing that authentication has succeeded to the distribution public key storage unit 412.

When authentication fails, the first authentication unit 411 aborts processing. Consequently, the content distribution server apparatus 200 does not write information to the memory card 400.

### (9) Elliptic curve decryption unit 414

The elliptic curve decryption unit 414 receives the encrypted combined information from the content distribution server apparatus via the Internet 10 and the PC 300. On receiving the encrypted combined information, the elliptic curve decryption unit 414 reads the distribution secret key from the distribution secret key storage unit 413, and applies a decryption algorithm D1 to the encrypted combined information according to the elliptic curve encryption method using the distribution secret key, to generate the title key and the usage condition key. Then, the elliptic curve decryption unit 414 writes the generated title key and usage condition key to the distribution data storage unit 423.

Here, the decryption algorithm D1 is an algorithm for performing conversion that is the inverse of the encryption algorithm E1.

### (10) DES decryption unit 415

The DES decryption unit 415 receives the encrypted usage condition data from the content distribution server apparatus 200 via the Internet 10 and the PC 300. On receiving the encrypted usage condition data, the DES decryption unit 415 reads the usage condition key from the distribution data storage unit 423. Then, the DES decryption unit 415 applies a decryption algorithm D2 to the encrypted usage condition data according to DES using the read usage condition key, to generate the usage condition data, and writes the generated usage condition data to the distribution data storage unit 423.

Here, the decryption algorithm D2 is an algorithm for performing conversion that is the inverse of the encryption algorithm E2.

### (11) Conversion unit 416

The conversion unit 416 reads the title key and the usage condition data from the distribution data storage unit 423, and writes the read title key and usage condition data to the recording data storage unit 422 in the stated order.

### (12) Second authentication unit 417

The second authentication unit 417 performs challenge-response type mutual device authentication with a second authentication unit 517 in the headphone stereo 500 (described later). Specifically, the second authentication unit 417 is authenticated by the second authentication unit 517. Then, the second authentication unit 417 authenticates the second authentication unit 517. Mutual device authentication is considered to have succeed only when both authentications succeed.

When both authentications succeed, the second authentication unit 417 outputs authentication success information showing that authentication has succeeded to the information storage unit 430.

When authentication fails, the second authentication unit 417 aborts processing. Consequently, information is not read from the memory card 400 by the headphone stereo 500.

### (13) DES encryption unit 419

The DES encryption unit 419 reads the title key and the usage condition data from the recording data storage unit 422, and the recording medium apparatus key from the recording medium apparatus key storage unit 418. Then, the DES encryption unit 419 applies an encryption algorithm E4 to the read title key and usage condition data respectively, according to DES using the read recording medium apparatus key, to generate a re-encrypted title key and re-encrypted usage condition data, and writes the generated re-encrypted title key and re-encrypted usage condition data to the second memory area 431.

### 1.4 Structure of the headphone stereo 500

As shown in Fig. 5, the headphone stereo 500 is composed of the second authentication unit 517, a recording medium apparatus key obtaining unit 518, a DES decryption unit 519, a re-encrypted data obtaining unit 531, a recording data storage unit 532, a usage condition judgement unit 540, a DES decryption unit 550, and a playback unit 541.

### (1) Recording data storage unit 532

The recording data storage unit 532 has areas for storing the title key and the usage condition data respectively.

### (2) Second authentication unit 517

The second authentication unit 517 performs challenge-response type mutual device authentication with the second authentication unit 417 in the memory card 400. Specifically, the second authentication unit 517 authenticates the second authentication unit 417. Then, the second authentication unit 517 is authenticated by the second authentication unit 417. Mutual device authentication is considered to have succeeded only when both authentications succeed.

When both authentications succeed, the second authentication unit 517 outputs authentication success information showing that authentication has succeeded to the recording medium apparatus key obtaining unit 518.

When authentication fails, the second authentication unit 517 aborts processing. Consequently, the headphone stereo 500 does not read information from the memory card 400.

### (3) Recording medium apparatus key obtaining unit 518

The recording medium apparatus key obtaining unit 518 receives the authentication success information from the second authentication unit 517. On receiving the authentication success information, the recording medium apparatus key obtaining unit 518 securely reads the recording medium apparatus key from the recording medium apparatus key storage unit 418 in the memory card 400, and outputs the read recording medium apparatus key to the DES decryption unit 519.

### (4) Re-encrypted data obtaining unit 531

The re-encrypted data obtaining unit 531 reads the re-encrypted title key and the re-encrypted usage condition data from the second storage area 431 of the memory card 400, and outputs the read re-encrypted title key and the re-encrypted usage condition data to the DES decryption unit 519.

### (5) DES decryption unit 519

The DES decryption unit 519 receives the recording medium apparatus key from the recording medium apparatus key obtaining unit 518, and the re-encrypted title key and the re-encrypted usage condition data from the re-encrypted data obtaining unit 531. Then, the DES decryption unit 519 applies a decryption algorithm D4 to the read re-encrypted title key and re-encrypted usage condition data respectively according to DES using the received recording medium apparatus key as the key, to generate the title key and the usage condition data, and writes the generated title key and usage condition data to the recording data storage unit 532.

Here, the decryption algorithm D4 is an algorithm for performing conversion that is the inverse of the encryption algorithm E4.

### (6) Usage condition judgement unit 540

The usage condition judgement unit 540 reads the usage condition data from the recording data storage unit 532, and uses the read usage condition data to judge whether playback of the content is permitted.

Specifically, the usage condition judgement unit 540 permits playback if playing back the content will result in the content being played back a total number of times that is less than or equal to the number in the playback count information included in the usage condition data, and does not permit playback if playing back the content would result in the content being played back a total number of times that exceeds the number in the playback count information. Furthermore, the usage condition judgement unit 540 permits playback if it is during the period shown in the playback period information included in the usage condition data, and does not permit playback if it is not during the period in the playback period information. Furthermore, the usage condition judgement unit 540 permits playback if it is within the accumulated value shown by the playback accumulated time information included in the usage condition data, and does not permit playback if it is not within the accumulated value. When playback is permitted in all of the three conditions, the usage condition judgement unit 540 generates a judgement result showing that playback is possible. When playback is not permitted according to one of the conditions, the usage condition judgement unit 540 generates a judgement result showing the playback is not possible.

Next, the usage condition judgement unit 540 outputs the judgement result showing whether playback is possible or not to the playback unit 541.

### (7) DES decryption unit 550

The DES decryption unit 550 reads the title key from the recording data storage unit 532, and the encrypted content from the first storage area 432 of the memory card 400. Then the DES decryption unit 550 applies a decryption algorithm D3 to the read encrypted content according to DES using the read title key, to generate decrypted content, and outputs the decrypted content to the playback unit 541.

Here, the decryption algorithm D3 is an algorithm for performing conversion that is the inverse of the encryption algorithm E3.

### (8) Playback unit 541

The playback unit 541 receives the judgement result from the usage condition judgement unit 540, and the decrypted content from the DES decryption unit 550. When the received judgement result shows that playback is possible, the playback unit 541 plays back the received decrypted content.

If the received decrypted content is music, the playback unit 541 converts the decrypted content into an analog electric signal showing music, and outputs the analog electric signal to the headphones 700. The headphones 700 convert the received the analog signal to music, and output the music.

### 1. 5 Operations of the digital work protection system 100

The following describes the operations of the digital work protection system 100.

### (1) Operations when writing to the memory card 400

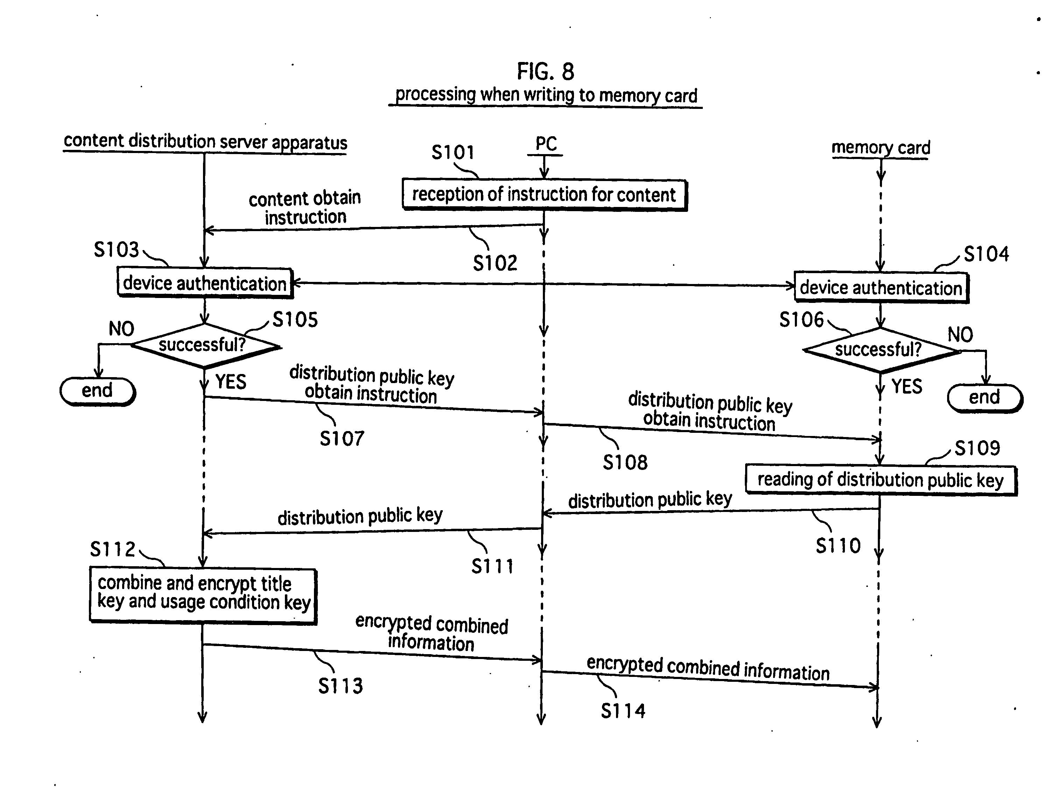

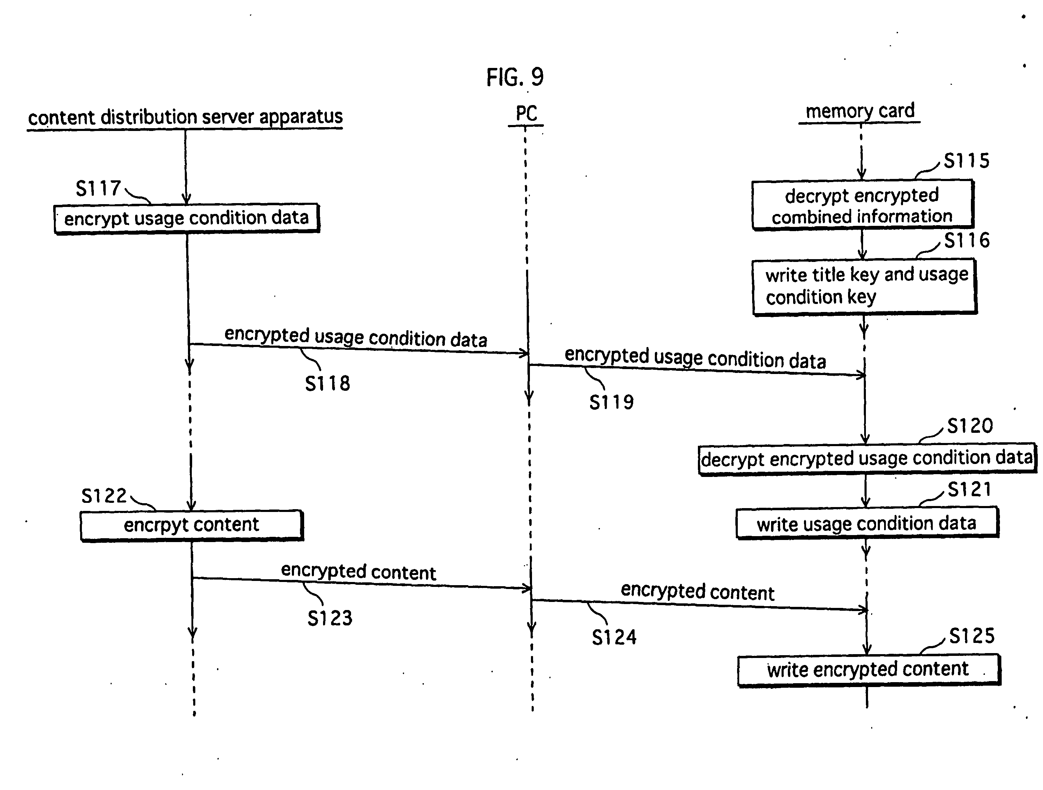

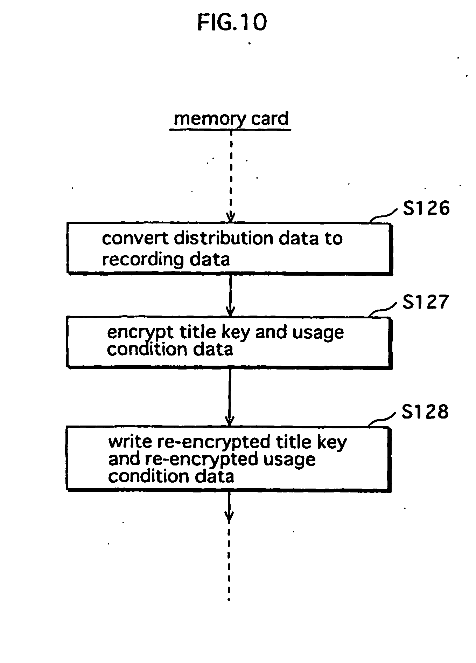

The following describes operations when the user inserts the memory card 400 into to PC 300 and purchases the content 600 stored in the content storage unit 201 of the content distribution server apparatus 200, with use of the flowcharts in Figs. 8 to 10.

The PC 300 receives designation of content from the user (step S101), and transmits an obtain instruction for the designated content via the Internet 10 to the content distribution server apparatus 200 (step S102).

On the content distribution server apparatus 200 receiving the obtain instruction (step S102), the first authentication unit 211 of the content distribution server apparatus 200 and the first authentication unit 411 of the memory card 400 perform mutual device authentication (step 103, step S104) .

When authentication succeeds (step S105), the distribution public key obtaining unit 212 outputs a distribution public key obtain instruction to the distribution public key storage unit 412 of the memory card 400 via the Internet 10 and the PC 300 (step S107 to step S108).

When authentication succeeds (step S106), the distribution public key storage unit 412 receives the distribution public key obtain instruction (step S108), reads the distribution public key (step S109), and securely outputs the read distribution public key to the distribution public key obtaining unit 212 via the PC 300 and the Internet 10 (step S110 to step S111) .

Next, the elliptic curve encryption unit 214 combines and then encrypts the title key and the usage condition key using the distribution public key as the key (step S112), and outputs the resulting encrypted combined information to the elliptic curve decryption unit 414 via the Internet 10 and the PC 300 (step S113 to step S114).

The elliptic curve decryption unit 414 decrypts the encrypted combined information (step S115), and writes the title key and the usage condition key to the distribution data storage unit 423 (step S116).

The DES encryption unit 215 encrypts the usage condition data (step S117), and outputs the encrypted usage condition data to the DES decryption unit 415 via the Internet 10 and the PC 300 (step S118, step S119).

The DES decryption unit 415 decrypts the encrypted usage condition data (step S120), and writes the usage condition data to the distribution data storage unit 423 (step S121).

The DES encryption unit 250 encrypts the content (step S122), and outputs the encrypted content to the first storage area 432 via the Internet 10 and the PC 300 (step S123 to step S124) . The first storage area 432 stores the encrypted content (step S125).

The conversion unit 416 converts the distribution data stored in the distribution data storage unit 423, to generate recording data, and writes the generated recording data to the recording data storage unit 422 (step S126). Then, the DES encryption unit 419 encrypts respectively the title key and the usage condition data stored in the recording data storage unit 422 (step S127), and writes the re-encrypted title key and re-encrypted usage condition data to the second storage area 431 (step S128).

### (2) Operations when reading from the memory card 400

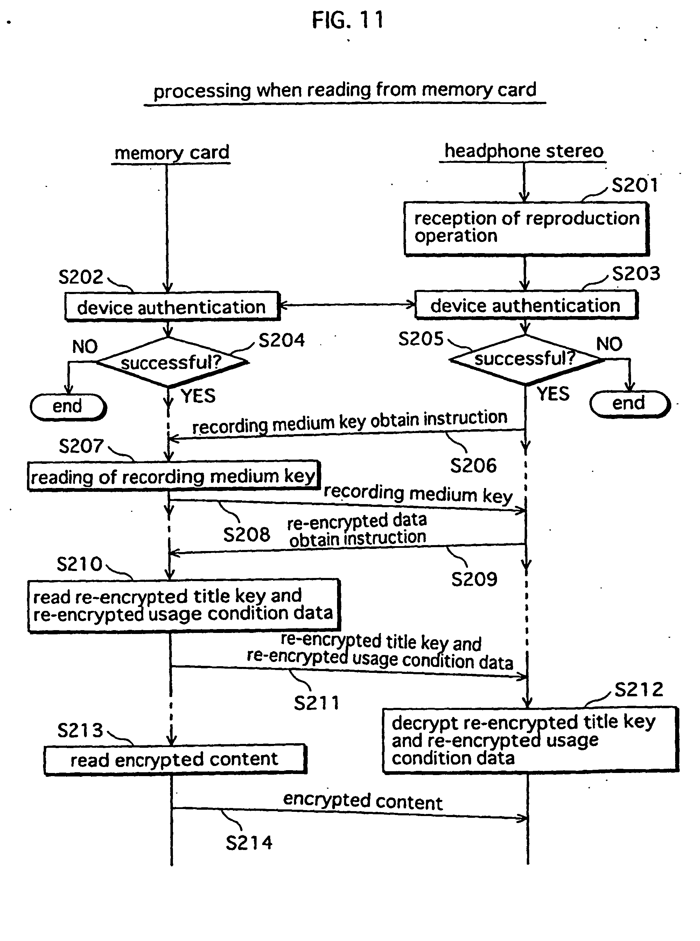

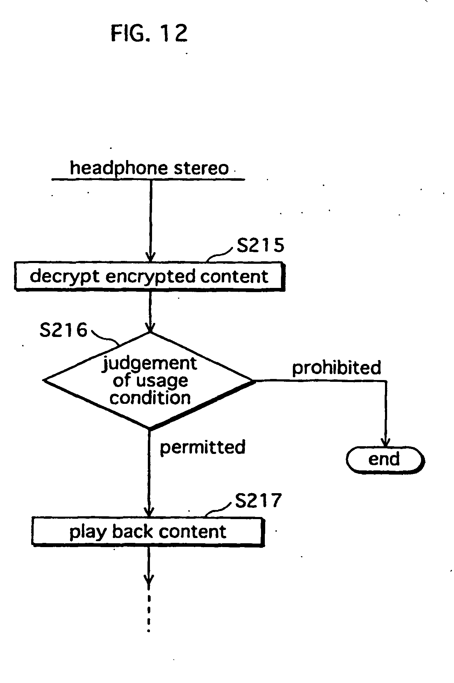

The following describes operations when the user removes the memory card 400 from the PC 300, inserts the memory card 400 in the headphone stereo 500, and has the content played back, with use of the flowcharts in Figs. 11 and 12.

On the receiving a content playback instruction from the user (step S201), the second authentication unit 517 of the headphone stereo 500 and the second authentication unit 417 of the memory card 400 perform mutual device authentication (step S202 and step S203).

When authentication succeeds (step S205), the recording medium apparatus key obtaining unit 518 outputs an instruction to obtain the recording medium apparatus key to the recording medium apparatus key storage unit 418 (step S206).

When authentication succeeds (step S204), the recording medium apparatus key storage unit 418 receives the instruction to obtain the recording medium apparatus key (step S206), reads the recording medium apparatus key (step S207), and outputs the read recording medium apparatus key to the recording medium apparatus key obtaining unit 518 (step S208).

The re-encrypted data obtaining unit 531 outputs an instruction to obtain re-encrypted data to the second storage area 431 (step S209). The second storage area 431 reads the re-encrypted title key and the re-encrypted usage condition data (step S210), and outputs the read re-encrypted title key and the re-encrypted usage condition data to the re-encrypted data obtaining unit 531 (step S211) . Then, the DES decryption unit 519 decrypts the re-encrypted title key and the re-encrypted usage condition data, and writes the resulting title key and usage condition data to the recording data storage unit 532 (step S212).

The first storage are 432 reads the encrypted content (step S213), and outputs the read encrypted content to the DES decryption unit 550 (step S214). The DES decryption unit 550 decrypts the encrypted content (step S215).

The usage condition judgment unit 540 reads the usage condition data from the recording information storage unit 532, and judges according to the read usage condition data whether playback of the content is permitted or not (step S216) . When playback is permitted (step S216), the playback unit 541 decrypts the encrypted content, and plays back the decrypted content (step S217).

### 1.6 Conclusion

As has been described, by performing decryption and re-encryption (decryption conversion) of the encrypted title key and usage condition data in the tamper-proof module unit of the recording medium apparatus, hacking by a dishonest third party is made difficult.

### 2. Second Embodiment

The following describes a digital work protection system 100b (not illustrated) as another embodiment of the present invention.

The digital work protection system 100b has the same construction as the digital work protection system 100, except that the digital work protection system 100b has a content distribution server apparatus 200b instead of the content distribution server apparatus 200, and a memory card 400b instead of the memory card 400. The following description focuses on the characteristics unique to the digital work protection system 100b.

### 2.1 Content distribution server apparatus 200b

The content distribution server apparatus 200b has a similar structure to the content server apparatus 200, and is composed of the first authentication unit 211, the distribution public key obtaining unit 212, the distribution data storage unit 202, the elliptic curve encryption unit 214, a hash unit 220, the content storage unit 201, the DES encryption unit 250, and a writing unit 221. The following description focuses on the characteristics unique to the content distribution server apparatus 200b.

### (1) Distribution data storage unit 202

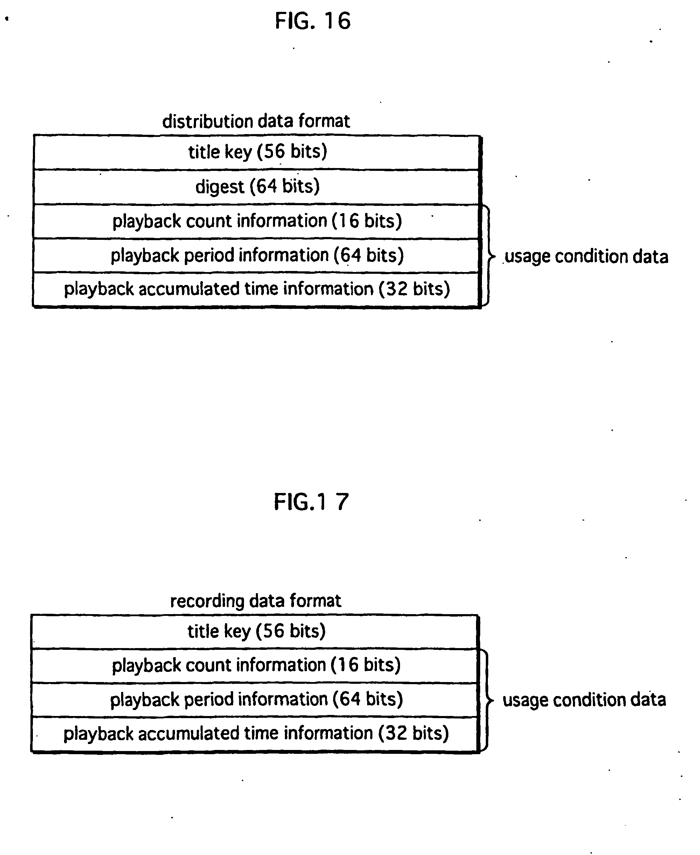

As shown in Fig. 16, the distribution data storage unit 202 is composed of areas for storing each of a title key, a digest, and usage condition data. The title key and the usage condition data are stored in advance. The title key, the digest, and the usage condition data correspond to the content 600 stored by the content storage unit 200.

Since the title key and the usage condition information were described earlier, a description thereof is omitted here.

The digest is a value obtained by applying a hash function to the usage condition data. The digest is written to the distribution data storage unit 202 by the hash unit 220.

### (2) First authentication unit 211

The first authentication unit 211 outputs the authentication success information showing that authentication has been successful to the distribution public key obtaining unit 212 and the elliptic curve unit 214.

### (3) Hash unit 220

The hash unit 220 reads the usage condition data from the distribution data storage unit 202, applies a hash function F1 to the read usage condition data, to generate a digest, and writes the generated digest to the distribution data storage unit 202.

Here, a United States standard SHA algorithm or the like can be used for the hash function F1. Details of SHA algorithms can be found, for example, in *Ango Riron Nyumon (Introduction* *to Cryptology),* Eiji Okamoto, Kyoritsu Shuppan Co., Ltd., 1993 .

### (4) Elliptic curve encryption unit 214

The elliptic curve encryption unit 214 reads the title key and the digest from the distribution data storage unit 202, then applies an encryption algorithm E1 according to the elliptic curve encryption method to combined information using the received distribution public key, to generate encrypted combined information. Here, the combined information is the title key and the digest combined.

### (5) Writing unit 221

The writing unit 221 reads the usage condition information from the distribution data storage unit 202, and writes the read usage condition data to the distribution data storage unit 423 via the Internet 10 and the PC 300.

### 2.2 Memory card 400b

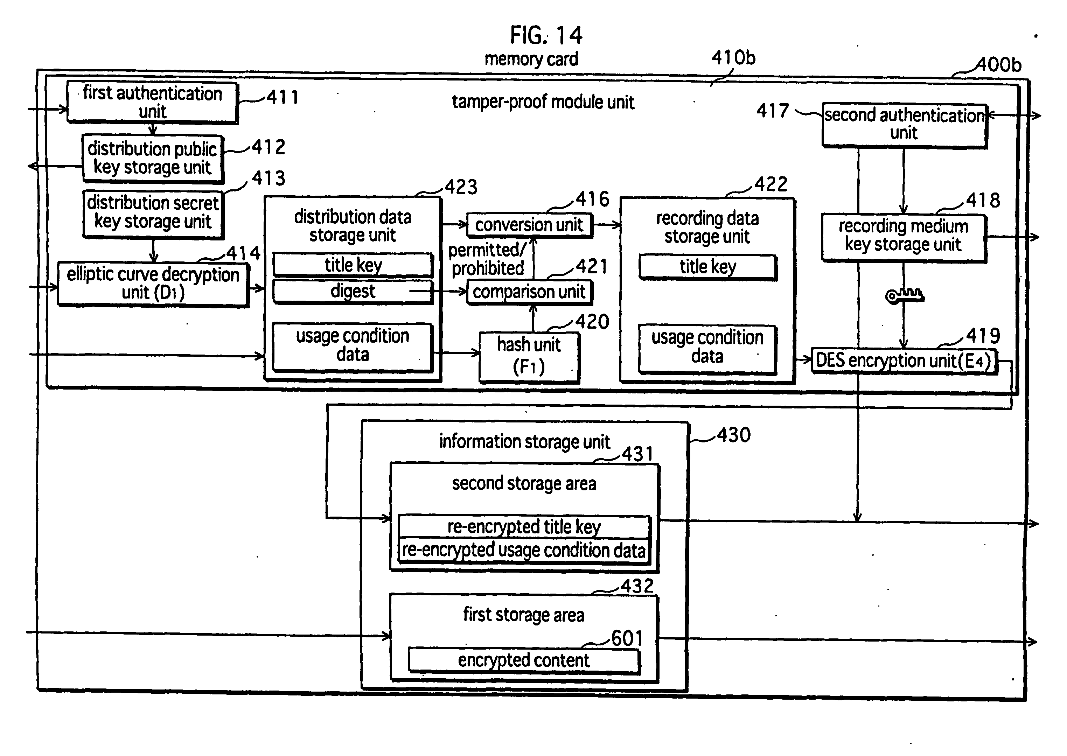

The memory card 400b has a similar construction to the memory card 400, and, as shown in Fig. 14, is composed of a tamper-proof module 410b that cannot be read from or written to from outside, and an information storage unit 430. The tamper-proof module 410b is composed of the first authentication unit 411, the distribution public key storage unit 412, the distribution secret key storage unit 413, the elliptic curve decryption unit 414, the conversion unit 416, the second authentication unit 417, the recording medium apparatus key storage unit 418, the DES encryption unit 419, a hash unit 420, a comparison unit 421, the distribution data storage unit 423, and the recording data storage unit 422. The following description focuses on the characteristics unique to the memory card 400b.

### (1) Elliptic curve decryption unit 414

The elliptic curve decryption unit 414 applies a decryption algorithm D1 according to the elliptic curve encryption method to the received encrypted combined information using the read distribution secret key, to generate the title key and the digest, and writes the generated title key and digest to the distribution data storage unit 423.

### (2) Hash unit 420

The hash unit 420 reads the usage condition data from the distribution data storage unit 423, applies the hash function F1 to the read usage condition data, to generate a digest, and outputs the generated digest to the comparison unit 421.

Here, the hash function F1 is the same as the hash function F1 used by the hash unit 220 of the content distribution server apparatus 200b.

### (3) Comparison unit 421

The comparison unit 421 reads the digest from the distribution data storage unit 423, and receives the digest from the hash unit 420. Then, the comparison unit 421 judges whether the read digest and the received digest match or not, and outputs judgement information showing whether the digests match or not to the conversion unit 416.

### (4) Conversion unit 416

The conversion unit 416 receives the judgement information from the comparison unit 421.

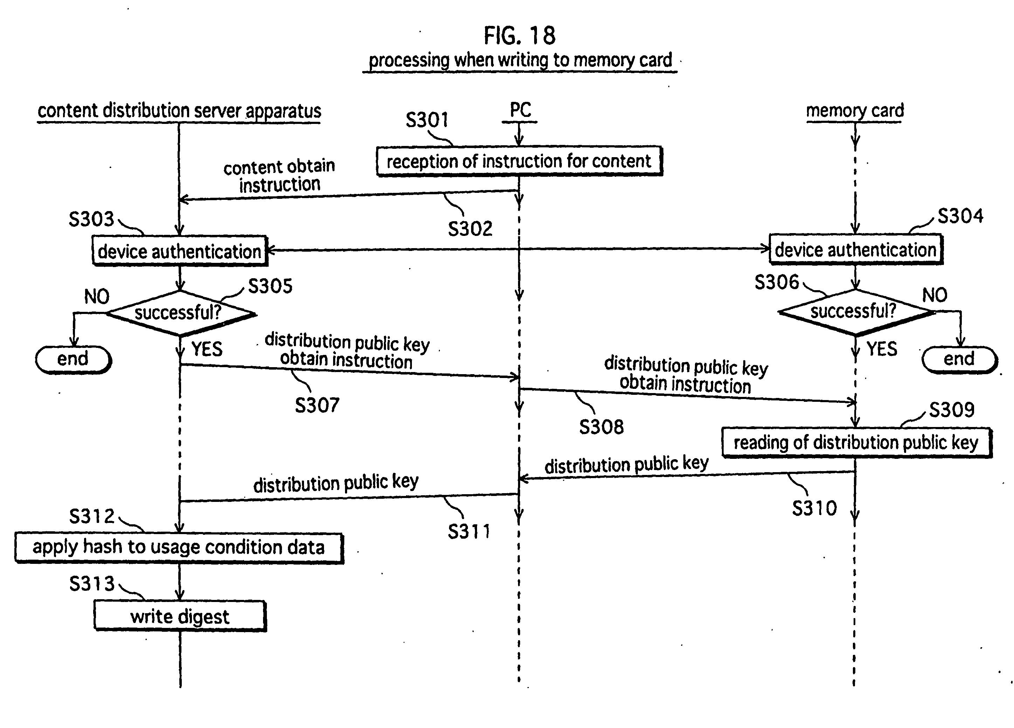

When the judgement information shows that the digests match, the conversion unit 416 reads the title key and the usage condition data from the distribution storage unit 423, and writes the read title key and usage condition data to the recording data storage unit 422 in the stated order. The title key and usage condition data written to recording data storage unit 422 are shown in Fig. 17.

When the judgement information shows that the digests do not match, the conversion unit 416 does nothing. Consequently, the title key and the usage condition data are not written to the recording data storage unit 422.

### 2.3 Construction of the headphone stereo 500

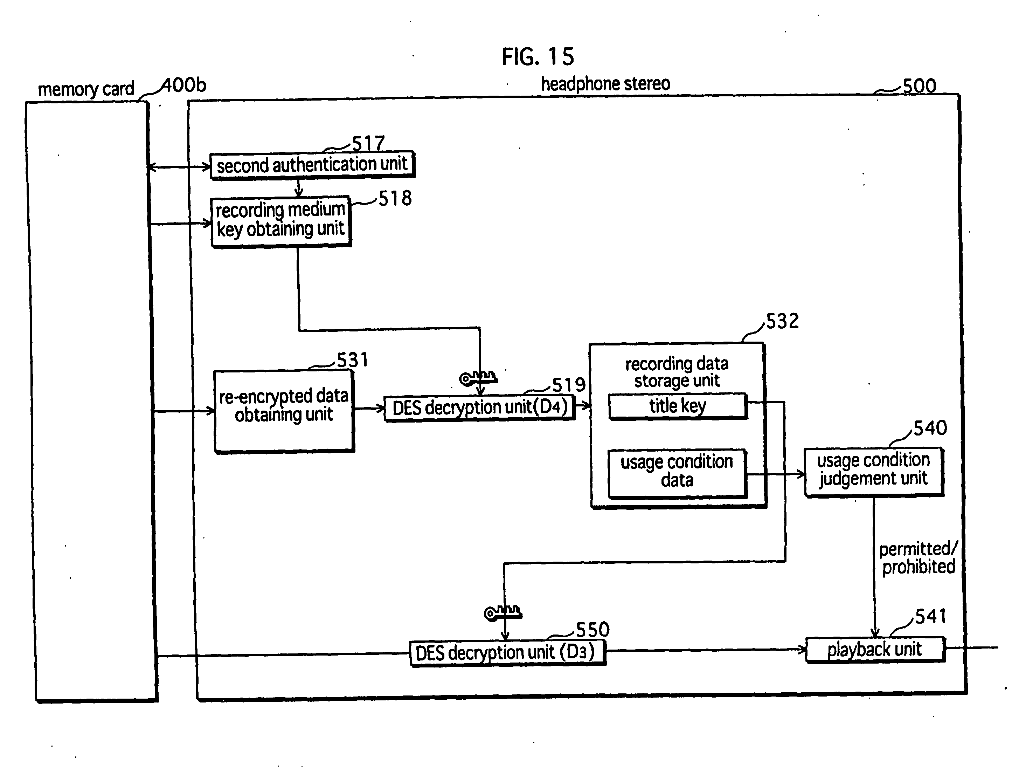

As shown in Fig. 15, the headphone stereo 500 is composed of the second authentication unit 517, the recording medium apparatus key obtaining unit 518, the DES decryption unit 519, the re-encrypted data obtaining unit 531, the recording data storage unit 532, the usage condition judgement unit 540, the DES decryption unit 550, and the playback unit 541. This is the same construction as the headphone stereo in the digital work protection system 100, and thus a description thereof is omitted.

### 2.4 Operations of the digital work protection system 100b

The following describes operations of the digital work protection system 100b.

### (1) Operations when writing to the memory card 400b

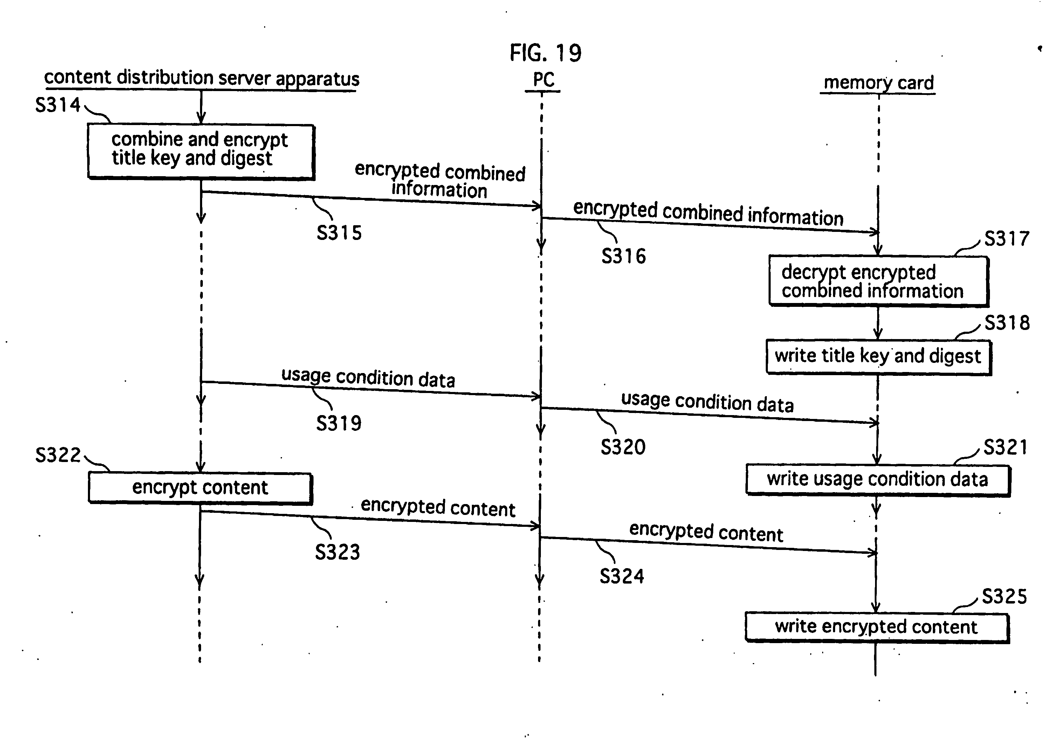

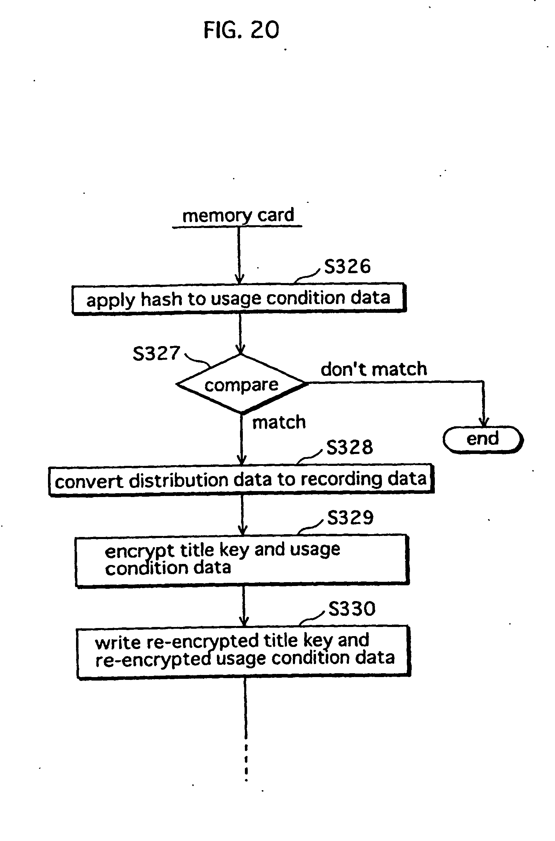

The following describes operations when the user inserts the memory card 400b into to PC 300 and purchases the content 600 stored in the content storage unit 201 of the content distribution server apparatus 200b, with use of the flowcharts in Figs. 18 to 20.

The PC 300 receives designation of content from the user (step S301), and transmits an obtain instruction for the designated content via the Internet 10 to the content distribution server apparatus 200b (step S302).

On the content distribution server apparatus 200b receiving the obtain instruction (step S302), the first authentication unit 211 of the content distribution server apparatus 200b and the first authentication unit 411 of the memory card 400b perform mutual device authentication (step 303, step S304).

When authentication succeeds (step S305), the distribution public key obtaining unit 212 outputs a distribution public key obtain instruction to the distribution public key storage unit 412 of the memory card 400b via the Internet 10 and the PC 300 (step S307 to step S308).

When authentication succeeds (step S306), the distribution public key storage unit 412 receives the distribution public key obtain instruction (step S308), reads the distribution public key (step S309), and outputs the read distribution public key to the distribution public key obtaining unit 212 via the PC 300 and the Internet 10 (step S310 to step S311).

Next, the hash unit 220 reads the usage condition data, applies the has function F1 to the read usage condition data, to generate a digest (step S312), and writes the generated digest to the distribution data storage unit 202 (step S313).

Next, the elliptic curve encryption unit 214 combines and then encrypts the title key and the usage using the distribution public key as the key (step S314), and outputs the resulting encrypted combined information to the elliptic curve decryption unit 414 via the Internet 10 and the PC 300 (step S315 to step S316).

The elliptic curve decryption unit 414 decrypts the encrypted combined information (step S317), and writes the title key and the digest to the distribution data storage unit 423 (step S318).

The writing unit 221 reads the usage condition data, and writes the read usage condition data to the distribution data storage unit 423 via the Internet 10 and the PC 300 (step S319 to step S320).

The DES encryption unit 250 encrypts the content (step S322), and outputs the encrypted content to the first storage area 432 via the Internet 10 and the PC 300 (step S323 to step S324) . The first storage area 432 stores the encrypted content (step S325).

Next, the hash unit 420 reads the usage condition data from the distribution data storage unit 423, applies the hash function F1 to the read usage condition data, to generate a digest, and outputs the generated digest to the comparison unit 421 (step S326) . Then, the comparison unit 421 reads the digest from the distribution data storage unit 423 and receives the digest from the hash unit 420, judges whether the read digest and the received digest match or not, and outputs judgement information showing whether the digests match or not to the conversion unit 416. The conversion unit 416 receives the judgement information from the comparison unit 421. When the judgement information shows that the digests match (step S327), the conversion unit 416 reads the title key and the usage condition data from the distribution storage unit 423, and writes the read title key and usage condition data to the recording data storage unit 422 in the stated order (step S328) . Then, the DES encryption unit 419 encrypts the title key and the usage condition data stored in the recording data storage unit 422 (step S329), and writes the re-encrypted title key and the re-encrypted usage condition data to the second storage area 431 (step S330).

When the judgement information shows that the digests do not match (Step S327), the conversion unit 416 does nothing, and the processing ends.

### (2) Operations when reading from the memory card 400b

Operations when the user removes the memory card 400b from the PC 300, inserts the memory card 400b in the headphone stereo 500, and plays back the content are the same as the operations shown in the flowcharts in Figs. 11 and 12 and thus a description thereof is omitted here.

### 2.5 Conclusion

As has been described, by performing decryption and re-encryption (decryption conversion) of the encrypted title key and usage condition data in the tamper-proof module unit of the recording medium apparatus, hacking by a dishonest third party is made difficult.

### 3. Third Embodiment

The following describes a digital work protection system 100c (not illustrated) as yet another embodiment of the present invention.

The digital work protection system 100c has the same construction as the digital work protection system 100, except that the digital work protection system 100c has a content distribution server apparatus 200c instead of the content distribution server apparatus 200, and a memory card 400c instead of the memory card 400. The following description focuses on the characteristics unique to the digital work protection system 100c.

### 3.1 Content distribution server apparatus 200c

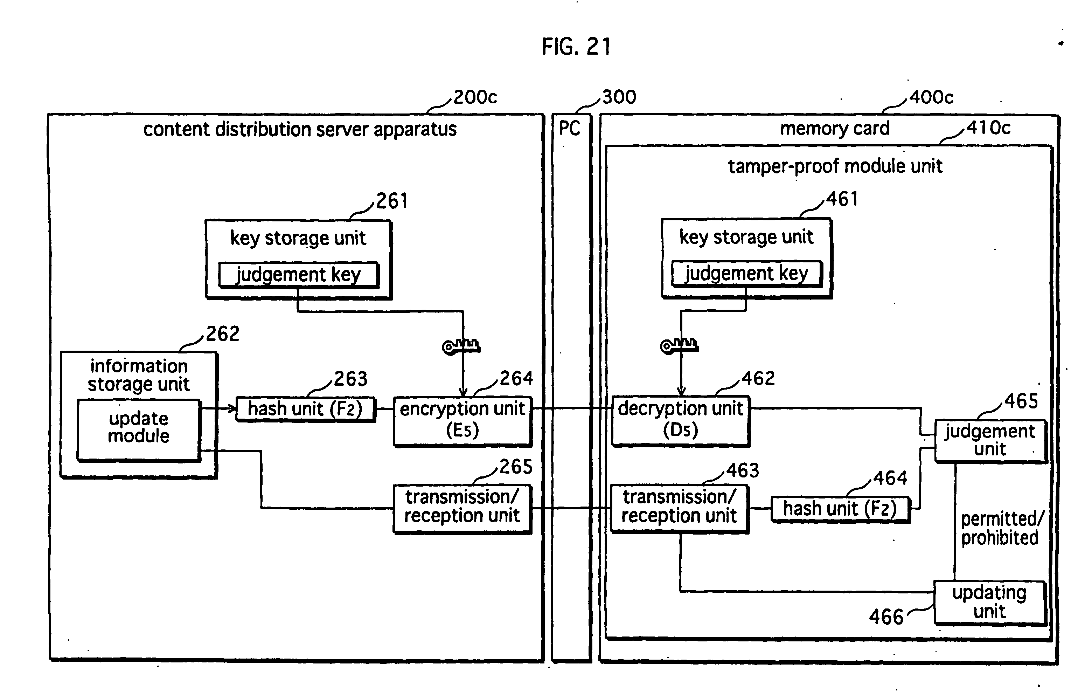

The content distribution server apparatus 200c, in addition to the constituent elements of the content distribution server apparatus 200, includes, as shown in Fig. 21, a key storage unit 261, an information storage unit 262, a hash unit 263, an encryption unit 264, and a transmission/reception unit 265.

### (1) Information storage unit 262

The information storage unit 262 stores an update module in advance.

The update module is information for updating computer programs, data, and the like included in the tamper-proof module unit of the memory card. Specifically, the update module is for updating the encryption method, decryption method, and conversion method included in the tamper-proof module.

### (2) Key storage unit 261

The key storage unit 261 stores a judgement key in advance. The judgement key is information that is 64 bits in length.

### (3) Hash unit 263

The hash unit 263 reads the update module from the information storage unit 262, applies a hash function F2 to the read update module to generate a first hash value, and outputs the generated first hash value to the encryption unit 264.

### (4) Encryption unit 264

The encryption unit 264 reads the judgement key from the key storage unit 261, and receives the first hash value from the hash unit 263. Then, the encryption unit 264 applies an encryption algorithm E5 to the received first hash value using the read judgement key, to generate and encrypted hash value, and transmits the generated encrypted hash value to a decryption unit 462 (described later) of the memory card 400c via the Internet 10 and the PC 300.

### (5) Transmission/reception unit 265

The transmission/reception unit 265 reads the update module from the information storage unit 262, and transmits the read module to a transmission/reception unit 463 (described later) of the memory card 400c via the Internet 10 and the PC 300.

### 3.2 Memory card 400c

The memory card 400c includes a tamper-proof module unit 410c instead of the tamper-proof module unit 410.

The tamper-proof module unit 410c, in addition to the compositional elements of the tamper-proof module unit 410, includes a key storage unit 461, the decryption unit 462, the transmission/reception unit 463, a hash unit 464, a judgement unit 465, and an updating unit 466.

### (1) Key storage unit 461

The key storage unit 461 stores a judgement key in advance. The judgement key is information that is 64 bits in length, and is the same as the judgement key stored by the key storage unit 261.

### (2) Decryption unit 462

The decryption unit 462 receives the encrypted hash value from the content distribution server apparatus 200c via the Internet 10 and the PC 300, and reads the judgement key from the key storage unit 461. Then, the decryption unit 462 applies a decryption algorithm D5 to the received encrypted hash value using the read judgement key, to generate a first hash value, and outputs the generated first hash value to the judgement unit 465.

Here, the decryption algorithm D5 is an algorithm for performing the conversion that is the inverse of the encryption algorithm E5.

### (3) Transmission/reception unit 463

The transmission/reception unit 463 receives the update module from the content distribution server apparatus 200c via the Internet 10 and the PC 30, and outputs the received update module to the hash unit 464 and the updating unit 466.

### (4) Hash unit 464

The hash unit 464 receives the update module from the transmission unit 463, applies the hash function F2 to the received update module to generate a second hash value, and outputs the generated hash value to the judgement unit 465.

### (5) Judgement unit 465

The judgement unit 465 receives the first hash value from the decryption unit 462, and receives the second hash value from the hash unit 464 . Then, the judgement unit 465 judges whether the received first hash value and the received second hash value match or not, and outputs judgement information showing whether the two hash values match or not to the updating unit 466.

### (6) Updating unit 466

The updating unit 466 receives the update module from the transmission/reception unit 463, and receives the judgement information from the judgement unit 465.

When the judgement information shows that the two hash values match, the updating unit 466 updates the computer program or the data stored in the tamper-proof module unit 410c, using the received update module.

### 3.3 Operations of the digital work protection system 100c

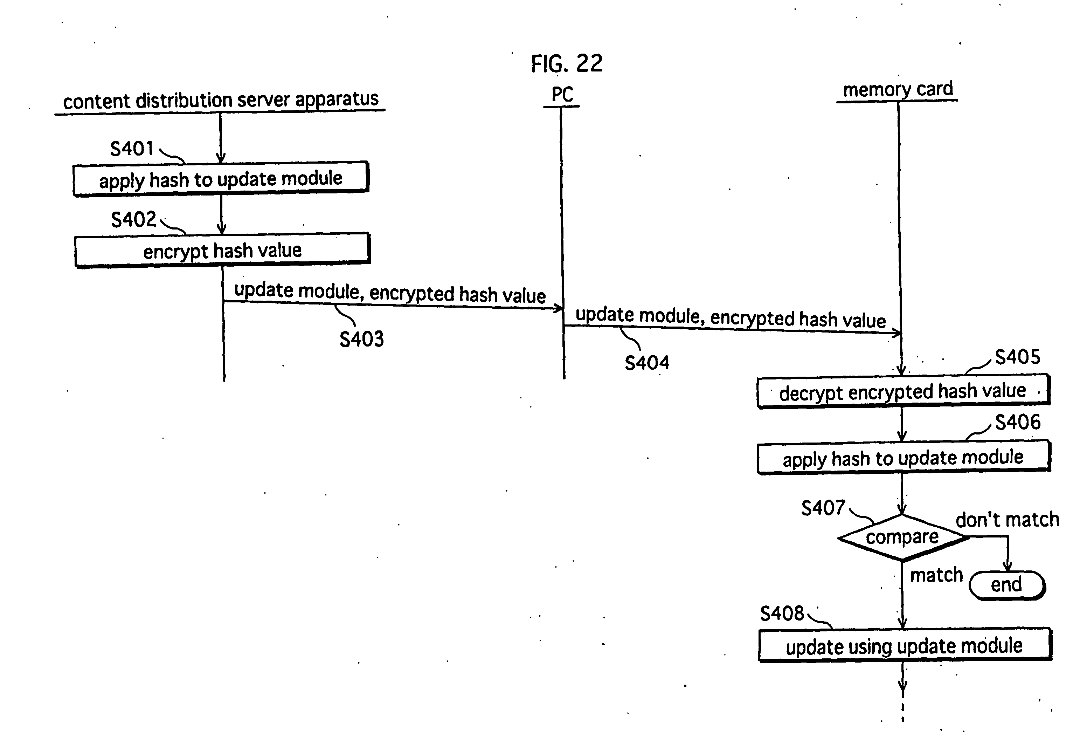

The following describes the operations in the digital work protection system 100c when a computer program or data included in the tamper-proof module 410c of the memory card 400c is updated, with use of the flowchart in Fig. 22.

In the content distribution server apparatus 200c, the hash unit 263 reads the update module from the information storage unit 262, applies a hash function F2 to the read update module to generate a first hash value, and outputs the generated first hash value to the encryption unit 264 (step S401) . The encryption unit 264 reads the judgement key from the key storage unit 261, receives the first hash value from the hash unit 263, applies an encryption algorithm E5 to the received first hash value using the read judgement key, to generate an encrypted hash value (step S402). Then, the encryption unit 264 transmits the generated encrypted hash value to the decryption unit 462 of the memory card 400c via the Internet 10 and the PC 300. The transmission/reception unit 265 reads the update module from the information storage unit 262, and transmits the read module to the transmission/reception unit 463 of the memory card 400c via the Internet 10 and the PC 300 (step S403, step S404).

In the memory card 400c, the decryption unit 462 receives the encrypted hash value from the content distribution server apparatus 200c via the Internet 10 and the PC 300, and the transmission/reception unit 463 receives the update module from the content distribution server apparatus 200c via the Internet 10 and the PC 300 (step S403, step S404) . Next, the decryption unit 462 reads the judgement key from the key storage unit 461, applies a decryption algorithm D5 to the received hash value, using the read judgement key, to generate a first hash value, and outputs the generated first hash value to the judgement unit 465 (step S405). Then, the hash unit 464 receives the update module from the transmission/reception unit 463, applies the hash function F2 to the received update module to generate a second hash value, and outputs the generated hash value to the judgement unit 465 (step S406) . The judgement unit 465 judges whether the received first hash value and the received second hash value match or not, and outputs judgement information showing whether the two hash values match or not to the updating unit 466. When the judgement information shows that the two hash values match (step S407), the updating unit 466 updates the computer program or the data stored in the tamper-proof module unit 410c, using the received update module (step S408) .

When the received judgement information shows that the two hash values do not match (step S407), the updating unit 466 does nothing, and the processing ends.

### 3.6 Conclusion

A conventional system uses a predetermined distribution data format and a predetermined distribution encryption method to encrypt the title key and the usage condition data, and after decrypting the encrypted title key and usage condition data in the user's computer, re-encrypts the title key and usage condition data and records the re-encrypted title key and usage condition data to a recording medium apparatus using a predetermined recording data format and predetermined recording encryption method.

However, when encryption conversion and data format conversion that conventionally are performed in the computer are performed in the tamper-proof modules of the recording medium apparatus, the tamper-proof modules cannot be easily made to treat content that is later generated in compliance with a different distribution encryption method and distribution data format.

In response to this it is an object of the present invention to provide a digital work protection system, a recording medium apparatus, server apparatus, and playback apparatus that enable safe updating of a tamper-proof module that performs encryption conversion and format conversion in the recording medium apparatus.

### 4. Gist of the application on which this application is based

As has been explained, the present invention is a digital work protection system that treats content that is a digital work. The digital work protection system is composed of a server apparatus, a recording medium apparatus, and a playback apparatus. The server apparatus includes a first encryption unit for encrypting the content in a manner unique to the content to generate encrypted content; and a second encryption unit for, in compliance with a predetermined distribution data format, encrypting usage condition data that expresses conditions for using the content, in a manner unique to the recording medium apparatus, to generate encrypted usage data. The recording medium apparatus includes an obtaining unit for obtaining the encrypted content and the encrypted usage data from the server apparatus; a first storage area for storing the encrypted content obtained by the obtaining unit; a second decryption unit that corresponds to the second encryption unit, and that is for decrypting the encrypted usage condition data obtained by the obtaining unit; a data format conversion unit for converting the usage condition information decrypted by the second decryption unit, from the distribution data format into a predetermined recording data format; a third encryption unit for encrypting the usage data converted by the data format conversion unit, in a manner unique to the recording medium apparatus, to generate re-encrypted usage condition data; and a second storage area for storing the re-encrypted usage condition data. Here, the second decryption unit, the data format conversion unit and the third encryption unit are tamper-proof modules. The playback apparatus includes a reading unit for reading the encrypted content from the first storage area of the recording medium apparatus, and the re-encrypted usage condition data from the second storage area of the recording medium apparatus; a third decryption unit that corresponds to the third encryption unit, and that is for decrypting the re-encrypted usage condition information read by the reading unit; a first decryption unit that corresponds to the first encryption unit, and that is for decrypting the encrypted content read by the reading unit; and a playback unit for reproducing the content decrypted by the first decryption unit, within a scope permitted by the usage condition data decrypted by the third decryption unit.

Here, the server apparatus further includes a distribution public key obtaining unit for securely obtaining a distribution public key that corresponds to a distribution secret key that is stored in a distribution secret key storage area of the recording medium apparatus and that is unique to the recording medium apparatus. The first encryption unit further encrypts content according to a common key encryption method, using a title key unique to the content, to generate encrypted content; the second encryption unit encrypts the title key and the usage condition data according to a public key encryption method, using the distribution public key obtained by the distribution public key obtaining unit, to generate an encrypted title key and encrypted usage condition data. The recording medium apparatus further includes the distribution secret key storage area for storing the distribution secret key that corresponds to the distribution public key; and a recording medium apparatus unique key storage area for storing the recording medium apparatus unique key that is unique to the recording medium apparatus. The obtaining unit obtains the encrypted content, the encrypted title key and the encrypted usage data from the server apparatus; the second decryption unit decrypts the encrypted title key and the encrypted usage information according to the public key encryption method, using the distribution secret key stored in the distribution secret key storage area. The third encryption unit encrypts the decrypted title key and usage condition data according to the common key encryption method, using the recording medium apparatus unique key stored in the recording medium apparatus unique key storage area, to generate a re-encrypted title key and re-encrypted usage condition data; and in addition to the second decryption unit, the data format conversion unit and the third encryption unit, the distribution secret key storage area and the recording medium apparatus unique key storage area are also tamper-proof modules. The playback apparatus further includes a recording medium apparatus unique key obtaining unit for securely obtaining the recording medium apparatus unique key stored in the recording medium apparatus unique key storage area of the recording medium apparatus. Here, the reading unit reads the re-encrypted title key and the re-encrypted usage condition data from the recording medium apparatus. The third decryption unit decrypts the re-encrypted title key and the re-encrypted usage condition data read by the reading unit, with the recording medium apparatus unique key, according to the common key encryption method. The first decryption unit decrypts the encrypted content, using the title key, according to the common encryption method, and the playback unit plays back the decrypted content within a scope permitted by the usage condition data.

Here, the second encryption unit in the server apparatus encrypts the title key and usage condition related information according to the public key encryption method, using the distribution public key, to generate an encrypted title key and encrypted usage condition related information. Here, the usage condition related information includes at least one of (a) a usage condition data digest value, and (b) a usage condition key used in encryption and decryption of the usage condition data. When the usage condition related information includes the usage condition data digest value, the second encryption unit generates the usage condition data digest value by applying a hash function to the usage condition data. When the usage condition related information includes the usage condition key, the second encryption unit encrypts the usage condition data according to a common key encryption method, using the usage condition key. The obtaining unit in the recording medium apparatus obtains the encrypted title key and the encrypted usage condition related information from the server apparatus. When the usage condition related information includes only the usage condition data digest value, the obtaining unit further obtains the usage condition data. When the usage condition related information includes the usage condition key, the obtaining unit obtains the encrypted usage condition data. The second decryption unit decrypts the encrypted title key and the encrypted usage condition related information according to the public key encryption method, using the distribution secret key. When the decrypted usage condition related information includes the usage condition key, the second decryption unit decrypts the encrypted usage condition data according to the common key method, using the usage condition key, to obtain usage condition data. When the usage condition related information includes the usage condition data digest value, the second decryption unit applies the hash function to the usage condition data to generate a usage condition data reference value, and judges whether the reference value and the usage condition data digest value included in the usage condition related information match.

Here, the recording medium apparatus and the server apparatus each further respectively include a first authentication unit. Before the server apparatus obtains the distribution public key from the recording medium apparatus, or before the recording medium apparatus obtains the encrypted title key and the encrypted usage condition data from the server apparatus, the first authentication unit of the server apparatus authenticates the recording medium apparatus, and the first authentication unit of the recording medium apparatus authenticates the server apparatus. When both authentications succeed, the server apparatus obtains the distribution public key from the recording medium apparatus, or the recording medium apparatus obtains the encrypted title key and the encrypted usage condition data.

Here, the recording medium apparatus and the playback apparatus each further respectively include a second authentication unit. Before the playback apparatus obtains the medium unique key from the recording medium apparatus, or before the recording medium apparatus reads the encrypted title key and the encrypted usage condition data from the playback apparatus, the second authentication unit of the playback apparatus authenticates the recording medium apparatus, and the second authentication unit of the recording medium apparatus authenticates the playback apparatus. When both authentications succeed, the recording medium apparatus obtains the medium authentic key from the recording medium apparatus, or the playback apparatus reads the encrypted usage condition data from the recording medium apparatus.

Here, when the distribution secret key of the recording medium apparatus is exposed, the server apparatus registers the distribution public key corresponding to the distribution secret key on a revoke list, and prohibits encrypting of the tile key and the usage condition data encrypted using the registered distribution public key, and provision thereof to the recording medium apparatus.

Here, the usage condition data includes information for controlling the number of times the content is played back, information for controlling a period in which the content is played back, or information for controlling the accumulated playback time of the content.

Here, the tamper-proof modules may be composed of tamper-proof hardware or tamper-proof software, or a combination of both.

Furthermore, the present invention is a recording medium apparatus for recording content that is a digital work, including: an obtaining unit for obtaining encrypted content and encrypted usage condition data; a first storage area for storing the obtained encrypted content; a second decryption unit for decrypting the obtained encrypted usage condition data; a data format conversion unit for converting the decrypted usage condition data from a predetermined distribution data format to a predetermined recording data format; a third encryption unit for encrypting the converted decrypted usage condition data in a manner unique to the recording medium apparatus, to generate re-encrypted usage condition data; and a second storage area for storing the re-encrypted usage condition data. Here, the second decryption unit, the data format conversion unit and the third encryption unit are tamper-proof modules.

Here, the recording medium apparatus further includes a distribution secret key storage area for storing a distribution secret key that corresponds to the distribution public key; and a recording medium apparatus unique key storage area for storing the recording medium apparatus unique key that is unique to the recording medium apparatus. The obtaining unit obtains the encrypted content, the encrypted title key and the encrypted usage data from the server apparatus. The second decryption unit decrypts the encrypted title key and the encrypted usage information according to the public key encryption method, using the distribution secret key stored in the distribution secret key storage area. The third encryption unit encrypts the decrypted title key and usage condition data according to the common key encryption method, using the recording medium apparatus unique key stored in the recording medium apparatus unique key storage area, to generate a re-encrypted title key and re-encrypted usage condition data. In addition to the second decryption unit, the data format conversion unit and the third encryption unit, the distribution secret key storage area and the recording medium apparatus unique key storage area are also tamper-proof modules.

Here, the obtaining unit of the recording medium apparatus obtains the encrypted title key and the encrypted usage condition related information from the server apparatus. When the usage condition related information includes only the usage condition data digest value, the obtaining unit further obtains the usage condition data. When the usage condition related information includes the usage condition key, the obtaining unit obtains the encrypted usage condition data, and the second decryption unit decrypts the encrypted title key and the encrypted usage condition related information according to the public key encryption method, using the distribution secret key. When the usage condition key is included in the decrypted usage condition related information, the second decryption unit decrypts the encrypted usage condition data according to the common key method, using the usage condition key, to obtain the usage condition data. When the usage condition data digest value is included in the usage condition related information, the second decryption unit applies the hash function to the usage condition data to generate a usage condition data reference digest value, and judges whether the reference digest value matches the usage condition data digest value included in the usage condition related information.

Here, the recording medium apparatus further includes a first authentication unit and a second authentication unit. Before the distribution public key is obtained by the server apparatus, or before the recording medium obtains the encrypted title key and the encrypted usage condition data from the server apparatus, the first authentication unit of the server apparatus authenticates the recording medium apparatus, and the first authentication unit of the recording medium apparatus authenticates the server apparatus. When both authentications succeed, the distribution public key is obtained by the server apparatus from the recording medium apparatus, or the recording medium apparatus obtains the encrypted title key and the encrypted usage condition data. Before the medium unique key is obtained by the playback apparatus from the recording medium apparatus, or before the encrypted title key and the encrypted usage condition information are read from the recording medium apparatus by the playback apparatus, the second authentication unit of the playback apparatus authenticates the recording medium apparatus, and the second authentication unit of the recording medium apparatus authenticates the playback apparatus. When both authentications succeed, the medium unique key is obtained by the playback apparatus, or the encrypted usage condition related information is read from the recording medium apparatus.

Here, when there is a change in the distribution data format or the recording data format, the tamper-proof module that is the data format conversion unit of the recording medium apparatus is updated.

Here, when there is a change in the encryption method used by the second decryption unit or the encryption method used by the third encryption unit of the recording medium apparatus, the tamper-proof module that is the second decryption unit or the third encryption unit is updated.

Here, the recording medium apparatus further includes a tamper-proof module judgement unit for judging the authenticity of a tamper-proof module to be updated. When the tamper-proof module unit judges a tamper-proof module to be authentic, the tamper-proof module is updated.

Here, the second decryption unit of the recording medium apparatus is made able to select for decryption an encryption method from amongst a plurality of encryption methods, and the third encryption unit selects one encryption method from amongst the plurality of encryption methods.

Here, the distribution key storage area of the recording medium apparatus stores a plurality of distribution secret keys, and the second decryption unit selects for use one of the plurality of distribution secret keys.

Here, the tamper-proof modules may be composed of tamper-proof hardware or tamper-proof software, or a combination of both.

Furthermore, the present invention is a server apparatus for providing content that is a digital work to a recording medium apparatus, including: a first encryption unit for encrypting the content in a manner unique to the content to generate encrypted content; and a second encryption unit for, in compliance with a predetermined distribution data format, encrypting usage condition data that expresses conditions for using the content, in a manner unique to the recording medium apparatus, to generate encrypted usage data.

Here, the server apparatus further includes a distribution public key obtaining unit for securely obtaining a distribution public key that corresponds to a distribution secret key that is stored in a distribution secret key storage area of the recording medium apparatus and that is unique to the recording medium apparatus. The first encryption unit further encrypts content according to a common key encryption method, using a title key unique to the content, to generate encrypted content; the second encryption unit encrypts the title key and the usage condition data according to a public key encryption method, using the distribution public key obtained by the distribution public key obtaining unit, to generate an encrypted title key and encrypted usage condition data.

Here, the second encryption unit in the server apparatus encrypts the title key and usage condition related information according to the public key encryption method, using the distribution public key, to generate an encrypted title key and encrypted usage condition related information. Here, the usage condition related information includes at least one of (a) a usage condition data digest value, and (b) a usage condition key used in encryption and decryption of the usage condition data. When the usage condition related information includes the usage condition data digest value, the second encryption unit generates the usage condition data digest value by applying a hash function to the usage condition data . When the usage condition related information includes the usage condition key, the second encryption unit encrypts the usage condition data according to a common key encryption method, using the usage condition key.

Here, the server apparatus further includes a first authentication unit. Before the server apparatus obtains the distribution public key from the recording medium apparatus or before the encrypted title key and the encrypted usage condition data are obtained by the recording medium apparatus, the first authentication unit of the server apparatus authenticates the recording medium apparatus, and the first authentication unit of the recording medium apparatus authenticates the server apparatus. When both authentications succeed, the server apparatus obtains the distribution public key from the recording medium apparatus, or the encrypted title key and the encrypted usage condition data are obtained from the server apparatus by the recording medium apparatus.

Here, when the distribution secret key of the recording medium apparatus is exposed, the second encryption unit of the server apparatus registers the distribution public key corresponding to the distribution secret key on a revoke list, and prohibits encryption of the recording medium apparatus of the tile key and the usage condition data using the registered distribution public key, and provision thereof to the recording medium apparatus.

Furthermore, the present invention is a playback apparatus for reading content that is a digital work from a recording medium apparatus, and reproducing the read content, including: a reading unit for reading encrypted content from the first storage area of the recording medium apparatus, and re-encrypted usage condition data from a second storage area of the recording medium apparatus; a third decryption unit that corresponds to a third encryption unit of the recording medium apparatus, and that is for decrypting the re-encrypted usage condition information read by the reading unit; a first decryption unit that corresponds to a first encryption unit of the server apparatus, and that is for decrypting the encrypted content read by the reading unit; and a playback unit for reproducing the content decrypted by the first decryption unit, within a scope permitted by the usage condition data decrypted by the third decryption unit.

Here, the playback apparatus further includes a recording medium apparatus unique key obtaining unit for securely obtaining the recording medium apparatus unique key stored in a recording medium apparatus unique key storage area of the recording medium apparatus. Here, the reading unit reads the re-encrypted title key and the re-encrypted usage condition data from the recording medium apparatus. The third decryption unit decrypts the re-encrypted title key and the re-encrypted usage condition data read by the reading unit, with the recording medium apparatus unique key, according to the common key encryption method. The first decryption unit decrypts the encrypted content, using the title key, according to the common encryption method. Then the playback unit plays back the decrypted content within a scope permitted by the usage condition data.

Here, the playback apparatus and the recording medium apparatus further respectively include a second authentication unit. Before the playback apparatus obtains the medium unique key from the recording medium apparatus, or before the encrypted title key and the encrypted usage condition data are read from the playback apparatus by the recording medium apparatus, the second authentication unit of the playback apparatus authenticates the recording medium apparatus, and the second authentication unit of the recording medium apparatus authenticates the playback apparatus. When both authentications succeed, the recording medium apparatus obtains the medium authentic key from the recording medium apparatus, or the encrypted usage condition data is read from the playback apparatus by the recording medium apparatus.

Here, the usage condition data includes information for controlling the number of times the content is played back, or information for controlling a period in which the content is played back, or information for controlling the accumulated playback time of the content.

As is clear from the above description, in the digital work protection system, recording medium apparatus, server apparatus, and playback apparatus of the present invention, since decryption and re-encryption (decryption conversion) of the encrypted title key and usage condition data are performed in the tamper-proof module unit of the recording medium apparatus, hacking is made very difficult for a dishonest third party.

Furthermore, it is also possible to safely update the tamper-proof module that performs encryption conversion and format conversion in the recording medium apparatus.

### 5. Modifications

The digital work protection system of the present invention is not limited to the described embodiments. The following structures are also possible.
(1) Other encryption techniques may be used instead of the use of DES and elliptic curve encryption as encryption algorithms described in the embodiments.
(2) The embodiments describe purchased content having usage conditions being stored on the memory card, and the content played back from the memory card, however, whether the content is purchased it is not essential to the present invention. For example, the same procedures may be used for free trial content that has usage conditions.
(3) The recording medium apparatus in which the content is stored is not limited to the memory card described in the embodiments, but may be another type of recording medium.
(4) In the embodiments the whole of the content is encrypted, but it is possible to encrypt only part of the content.
(5) Usage condition data is not limited to being appended to each content as described in the embodiments.

For example, the usage condition data may indicate purchasing of up to 100 pieces of music data per month. In this case, a possible structure is one in which the usage condition judgement unit does not permit playback of the content recorded in the storage area of the memory card once the monthly contract has been ended.
(6) It is not necessary for usage condition data to be appended to the content as described in the embodiments. The present invention is applicable even without usage content data.
(7) If the memory card's distribution secret key is exposed, the content server apparatus may register the distribution public key corresponding to the distribution secret key on a revoke list, and prohibit provision to the memory card of the title key and so on that have been encrypted using the registered distribution public key.
(8) The memory card's tamper-proof module unit may include tamper-proof hardware or tamper-proof software, or a combination of both.
(9) A structure is possible in which when the distribution data format or the recording data format is changed, the tamper-proof module that composes the data format conversion unit of the memory card is updated.
(10) A structure is possible in which when the encryption method (elliptic curve, DES, etc.) used by the content distribution server apparatus is changed or an additional method added, or when it is necessary to update or add to the encryption methods used in the tamper-proof modules of the memory card in correspondence with an additional method, the tamper-proof modules are updated.
(11) In (9) or (10), a structure is possible in which the memory card includes a tamper-proof module judgement unit for judging the authenticity of a tamper-proof module to be updated, and the tamper-proof module updated only when it is judged to be authentic.
(12) A structure is possible in which the memory card is provided with a plurality of encryption methods in advance, one method is selected from amongst the plurality of methods, and encryption and decryption are performed using the selected method.
(13) A structure is possible in which the memory card stores a plurality of distribution secret keys in advance, and the elliptic curve decryption unit uses one key selected from among the distribution secret keys.
(14) The digital work protection system described in the embodiments is not limited to including a headphone stereo. For example, instead of a headphone stereo, the system may include a mobile telephone, an L-mode landline telephone, a mobile information terminal apparatus, a personal computer, or an electrical appliance such as a television that connects to the Internet. Such playback apparatuses play back digital works such as music, movies, electronic books, and game programs.

Furthermore, the content distribution server 200 and the PC 300 are not limited to being connected via the Internet 30, but may instead be connected via, for example, the Internet and a mobile telephone network. Furthermore, a broadcast apparatus may be connected to the content distribution server, information such as content broadcast on a broadcast wave, and the electrical appliance such as a television may received the broadcast wave, and extract the various types of information from the received broadcast wave.
(15) The present invention may be methods shown by the above. Furthermore, the methods may be a computer program realized by a computer, and may be a digital signal of the computer program.

Furthermore, the present invention may be a computer-readable recording medium apparatus such as a flexible disk, a hard disk, a CD-ROM (compact disk-read only memory), and MO (magneto-optical), a DVD-ROM (digital versatile disk-read only memory), a DVD RAM (digital versatile disk-random access memory), or a semiconductor memory, that stores the computer program or the digital signal. Furthermore, the present invention may be the computer program or the digital signal recorded on any of the aforementioned recording medium apparatuses.

Furthermore, the present invention may be the computer program or the digital signal transmitted on a electric communication line, a wireless or wired communication line, or a network of which the Internet is representative.

Furthermore, the present invention may be a computer system that includes a microprocessor and a memory, the memory storing the computer program, and the microprocessor operating according to the computer program.

Furthermore, by transferring the program or the digital signal to the recording medium apparatus, or by transferring the program or the digital signal via a network or the like, the program or the digital signal may be executed by another independent computer system.

## Claims

1. A portable recording medium apparatus on which is recorded a digital information that is transmitted from a transmission apparatus via a reception apparatus, the recording medium apparatus being connected to the reception apparatus, and the transmission apparatus encrypting original content that is a digital information, based on a distribution encryption key, to generate first encrypted information, and transmitting the generated first encrypted information via a network to the reception apparatus, the recording medium apparatus comprising:
an information storage unit that includes an information storage area; and
a tamper-proof module unit including:
a key storage sub-unit operable to store in advance a distribution decryption key and a medium unique key that is unique to the recording medium apparatus;
an obtaining sub-unit operable to obtain the transmitted first encrypted information via the reception apparatus;
an decryption sub-unit operable to decrypt the first encrypted information, based on the distribution decryption key, to generate intermediate information;
an encryption sub-unit operable to encrypt the intermediate information, based on the medium unique key, to generate second encrypted information; and
a writing sub-unit operable to write the generated second encrypted information to the information storage unit.

2. The recording medium apparatus of Claim (7) wherein
the transmission apparatus encrypts, as the digital information, original content that is a digital work, based on a distribution key, to generate the first encrypted information, and transmits the generated first encrypted information to the reception apparatus via the network, and
the recording medium apparatus obtains the first encrypted information via the reception apparatus.

3. The recording medium apparatus of Claim 2,
wherein the transmission apparatus further (a) stores usage condition information showing conditions for usage of the digital work, and an original usage condition key that is unique to the usage condition information, (b) encrypts the original usage condition key, using the distribution encryption key, to generate a first encrypted usage condition key, (c) encrypts the usage condition information using the original usage condition key, to generate first encrypted usage condition information, and (d) transmits the first encrypted usage condition key and the first encrypted usage condition information via the network to the reception apparatus,
the obtaining sub-unit further obtains the first encrypted usage condition key and the first encrypted usage condition information via the reception apparatus,
the decryption sub-unit further decrypts the first encrypted usage condition key using the distribution key, to generate an intermediate usage condition key, and decrypts the first encrypted usage condition information using the generated intermediate usage condition key, to generate intermediate usage condition information,
the encryption sub-unit further encrypts the intermediate usage condition information using the medium unique key, to generate second encrypted usage condition information, and
the writing sub-unit further writes the generated second encrypted usage condition information.

4. The recording medium apparatus of Claim 3, wherein
the transmission apparatus (a) stores in advance original content, and an original content key that is unique to the original content, (b) obtains the distribution encryption key that is used in distributing digital content, (c) encrypts the original content using the original content key, to generate encrypted content, (d) encrypts the original content key using the obtained distribution encryption key, to generate a first encrypted content key, and (d) transmits the first encrypted information that includes the generated encrypted content and the first encrypted content key,
the obtaining sub-unit obtains the obtained first encrypted information,
the decryption unit decrypts the first encrypted content key using the distribution decryption key, to generate an intermediate content key, and generates intermediate information that includes the encrypted content and the generated intermediate content key,
the encryption unit encrypts the intermediate content key included in the intermediate information, using the medium unique key, to generate a second content key, and generates second encrypted information that includes the encrypted content included in the intermediate information and the second encrypted content key, and
the writing sub-unit writes the second encrypted information.

5. The recording medium apparatus of Claim 4,
wherein the transmission apparatus further obtains the distribution encryption key, which is a public key generated using a public key generation algorithm, based on a distribution decryption key that is a secret key, and performs encryption according to a public key encryption algorithm using a distribution encryption key that is a public key, and
the decryption sub-unit performs decryption according to a public key decryption algorithm using a distribution decryption key.

6. The recording medium apparatus of Claim 3,
wherein the tamper-proof module unit further includes:
a conversion sub-unit operable to convert a format of the intermediate information from a distribution data format into a recording data format, to generate recording intermediate information,
wherein the encryption sub-unit encrypts the recording intermediate information instead of the intermediate information.

7. The recording medium apparatus of Claim 6,
wherein the transmission apparatus stores in advance update information for updating the tamper-proof module unit of the recording medium apparatus, reads the update information, and transmits the read update information to the recording medium apparatus via the network and the reception apparatus,
the tamper-proof module unit includes a microprocessor and a semiconductor memory that stores a computer program, and compositional elements of the tamper-proof module unit operate according to the microprocessor operating in accordance with the computer program,
the obtaining sub-unit obtains the update information via the reception apparatus, and
the tamper-proof module unit further includes:
a update sub-unit operable to update the computer program using the obtained update information, resulting in the compositional elements included in the tamper-proof module unit being updated.

8. The recording medium apparatus of Claim 7,
wherein the transmission apparatus further reads the update information, applies a hash algorithm to the read update information to generate a first hash value, and securely transmits securely the generated hash value to the recording medium apparatus via the network and the reception apparatus,
the tamper-proof module unit further includes:
a hash sub-unit operable to apply the hash algorithm to the obtained update information, to generate a second hash value; and
a comparison judgement sub-unit operable to judge whether the obtained first hash value and the generated second hash value match, and
the update sub-unit updates only when the comparison judgement sub-unit judges that the first hash value and the second hash value match.

9. The recording medium apparatus of Claim 8.
wherein the update information stored by the transmission apparatus includes information for updating in the tamper-proof module unit at least one of (a) an encryption method, (b) a decryption, and (c) a conversion method used by the tamper-proof module unit for converting a distribution data format to a recording data format,
the transmission apparatus transmits the update information,
the obtaining sub-unit obtains the update information via the reception apparatus, and
the update sub-unit updates the computer program using the obtained update information, resulting in at least one of the encryption sub-unit, the encryption sub-unit, and the conversion sub-unit in the tamper-proof module being updated.

10. The recording medium apparatus of Claim 3,
wherein the transmission apparatus further (a) stores usage condition information that shows conditions for usage of the digital work, (b) reads the usage condition information, (c) applies a hash algorithm to the read usage condition information, to generate a hash value, and (d) transmits securely the generated hash value and the read usage condition information via the network,
the obtaining unit further obtains the transmitted first hash value and the transmitted usage condition data via the reception apparatus,
the tamper-proof module unit further includes:
a hash sub-unit operable to apply the hash algorithm to the obtained usage condition information, to generate a second hash value; and
a comparison judgement sub-unit operable to judge whether the obtained first hash value and the generated second hash value match.
the encryption sub-unit encrypts only when the comparison judgement unit judges that the first hash value and the second hash value match, and
the writing-sub unit writes only when the comparison judgement unit judges that the first hash value and the second hash value match.

11. The recording medium apparatus of Claim 3,
wherein the transmission apparatus further performs mutual device authentication with the recording medium apparatus, obtains the distribution encryption key, and encrypte and transmits only when the authentication is successful,
the tamper-proof module unit further includes:
an authentication sub-unit operable to mutually authenticate device authenticity with the transmission apparatus,
the obtaining sub-unit obtains only when the authentication is successful,
the decryption sub-unit decrypts only when the authentication is successful,
the encryption sub-unit encrypts only when the authentication is successful, and
the writing sub-unit writes only when the authentication is successful.

12. The recording medium apparatus of Claim 3, being connected to the playback apparatus, and the playback apparatus reading information from the information storage unit,
wherein the tamper-proof module unit further includes:
an authentication sub-unit operable to perform mutual device authentication with the playback apparatus, and permit the playback apparatus to read information only when the authentication is successful.

13. The recording medium apparatus of Claim 3,
wherein the decryption sub-unit is provided in advance with a plurality of decryption methods, and decrypts using one decryption method selected from among the plurality of decryption methods, the selected decryption method being a inverse conversion of an encryption method used in the transmission apparatus, and
the encryption sub-unit is provided in advance with a plurality of encryption methods, and encrypts using one encryption method selected from among the plurality of encryption methods.

14. The recording medium apparatus of Claim 3,
wherein the key storage sub-unit stores a plurality of distribution decryption key candidates, and one distribution decryption key candidate is selected from among the plurality of distribution decryption key candidates as the distribution decryption key, and
the decryption sub-unit uses the selected distribution decryption key.

15. The recording medium apparatus of Claim 3,
wherein the tamper-proof module unit is made tamper-proof according to one of software, hardware, and a combination of software and hardware.

16. The recording medium apparatus of claim 1
wherein
the transmission apparatus encrypts, as the digital information, at least one of a content key and a usage condition, based on a distribution key, to generate the first encrypted information, and transmits the generated first encrypted information to the reception apparatus via the network, and
the recording medium apparatus obtains the first encrypted information via the reception apparatus.

17. The recording medium apparatus of Claim 16, wherein
the tamper-proof module unit further includes:
a conversion sub-unit operable to convert a format of the intermediate information from a distribution data format into a recording data format, to generate recording intermediate information,
wherein the encryption sub-unit encrypts the recording intermediate information instead of the intermediate information

18. A digital information protection system according to any of claims 1-17 in which a digital information transmitted by a transmission apparatus is written to a portable recording medium apparatus via a reception apparatus, and played back by a playback apparatus, comprising:
the transmission apparatus operable to encrypt digital information, based on a distribution encryption key, to generate first encrypted information, and transmit the generated first encrypted information via a network;
the reception apparatus operable to, in a state in which the recording medium apparatus is connected to the reception apparatus, receive the first encrypted information via the network, and output the received first encrypted information to the recording medium apparatus;
the recording medium apparatus according to any of claims 1-17;
the playback apparatus operable to, in a state in which the recording medium apparatus to which the second encrypted information has been written is connected to the playback apparatus, (a) read the second encrypted information from the information storage area, (b) read securely the medium unique key, (c) decrypt the read second encrypted information, based on the medium unique key, to generate decrypted digital information, and (d) play back the decrypted digital information.

19. The digital information protection system of Claim 18, wherein
the transmission apparatus encrypts, as the digital information, original content that is a digital work, based on a distribution key, to generate the first encrypted information, and transmits the generated first encrypted information to the reception apparatus via the network, and
the recording medium apparatus obtains the first encrypted information via the reception apparatus.

20. The digital information protection system of Claim 19,
wherein the transmission apparatus (a) stores in advance original content, and an original content key that is unique to the original content, (b) obtains the distribution encryption key that is used in distributing digital content, (c) encrypts the original content using the original content key, to generate encrypted content, (d) encrypts the original content key using the obtained distribution encryption key, to generate a first encrypted content key, and (d) transmits the first encrypted information that includes the generated encrypted content and the first encrypted content key,
the reception apparatus receives the first encrypted information, and outputs the received first encrypted information,
the tamper-proof module unit (a) stores in advance the distribution decryption key and the medium unique key, (b) obtains the output first encrypted information, (c) decrypts the first encrypted content key using the distribution decryption key, to generate an intermediate content key, (d) encrypts the generated intermediate content key using the medium unique key, to generate a second encrypted content key, and (e) writes the second encrypted information that includes the obtained encrypted content and the second encrypted content key to the information storage area, and
the playback apparatus (a) obtains securely the medium unique key from the recording medium apparatus, (b) reads the second encrypted information that includes the encrypted content and the second encrypted content key from the information storage area, (c) decrypts the second encrypted content key using the obtained medium unique key, to generate a decrypted content key, and (d) decrypts the read encrypted content using the generated decrypted content key, to generate decrypted content.

21. The digital information protection system of Claim 18, wherein
the transmission apparatus encrypts, as the digital information, at least one of a content key and a usage condition, based on a distribution key, to generate the first encrypted information, and transmits the generated first encrypted information to the reception apparatus via the network, and
the recording medium apparatus obtains the first encrypted information via the reception apparatus.

22. A digital information protection system composed of a transmission apparatus that transmits a digital work, a reception apparatus that receives the transmitted digital work via a network, and records the received digital work to a portable recording medium apparatus, a playback apparatus that plays back the digital work that is recorded in the recording medium apparatus, and the recording medium apparatus of any of claims 1-17
the transmission apparatus comprising:
a storage unit operable to store in advance original content that is the digital work, and an original content key that is unique to the original content;
a distribution encryption key obtaining unit operable to obtain a distribution encryption key that is used in digital work distribution;
an encryption unit operable to encrypt the original content using the original content key, to generate encrypted content, and encrypt the original content key using the obtained distribution encryption key, to generate a first encrypted content key; and
a transmission unit operable to transmit the encrypted content and the first encrypted content key via a network;
the reception apparatus, in a state in which the recording medium apparatus is connected thereto, comprising:
a reception unit operable to receive the encrypted content and the first encrypted content key via the network; and
an output unit operable to output the received encrypted content and the received first encrypted content key,
the playback apparatus, in a state in which the recording medium apparatus to which the encrypted content and the second encrypted content are written is connected thereto, comprising:
a key obtaining unit operable to obtain securely the medium original key from the key storage unit;
a reading unit operable to read the encrypted content and the second encrypted content key from the information storage unit;
a content key decryption unit operable to decrypt the read second encrypted content key using the obtained medium unique key, to generate a decrypted content key;
a content decryption unit operable to decrypt the read encrypted content using the generated decrypted content key, to generate decrypted content; and
a playback unit operable to play back the generated decrypted content.

23. A playback apparatus that plays back digital information that is transmitted by a transmission apparatus via a network and a reception apparatus, and written to a recording medium apparatus, the transmission apparatus encrypting digital information, based on a distribution encryption key, to generate first encrypted information, and transmits the generated first encrypted information via the network to the reception apparatus, in a state in which the recording medium apparatus is connected to the reception apparatus,
the playback apparatus comprising:
the recording medium of any of claims 1-17;
a key obtaining unit operable to obtain securely the medium unique key from the recording medium apparatus;
a reading unit operable to read the second encrypted information from the information storage area; and
a decryption unit opcrable to decrypt the read second encrypted information, based on the medium unique key, to generate decrypted digital information.

24. The playback apparatus of Claim 23, wherein
the transmission apparatus encrypts, as the digital information, original content that is a digital work, to generate the first encrypted information,
the decryption unit decrypts the read second encrypted information, based on the obtained medium unique key, to generate decrypted content, and
the playback apparatus further comprises:
a playback unit operable to play back the generated decrypted content.

25. The playback apparatus of Claim 24,
wherein the transmission apparatus (a) stores in advance original content and an original content key that is unique to the original content, (b) obtains the distribution encryption key that is used in distributing digital content, (c) encrypts the original content using the original content key, to generate encrypted content, (d) encrypts the original content key using the obtained distribution encryption key, to generate a first encrypted content key, and (e) transmits the first encrypted information that includes the generated encrypted content and the first encrypted content key,
the tamper-proof module unit (a) stores in advance the distribution decryption key and the medium unique key, (b) obtains the output first encrypted information, (c) decrypts the first encrypted content key using the distribution decryption key, to generate an intermediate content key, (d) encrypts the generated intermediate content key using the medium unique key, to generate a second encrypted content key, and (e) writes the second encrypted information to the information storage area,
the reading unit reads the second encrypted information, and
the decryption unit decrypts the read second encrypted content key using the obtained medium unique key, to generate a decrypted content key, and decrypts the read encrypted content using the generated decryption content key, to generate decrypted content.

26. The playback apparatus of Claim 25,
wherein the transmission apparatus further (a) stores usage condition information that shows conditions for using the digital work, and an original usage condition key that is unique to the usage condition information, (b) encrypts the original usage condition key using the distribution encryption key, to generate a first encrypted usage condition key, (c) encrypts the usage condition information using the original usage condition key, to generate first encrypted usage condition information, and (d) transmits the first encrypted usage condition key and the first encrypted usage condition information via the network to the reception apparatus,
the recording medium apparatus further (a) obtains via the network the first encrypted usage condition key and the first encrypted usage condition information, (b) decrypts the first encrypted usage condition key using the distribution decryption key, to generate an intermediate usage condition key, (c) decrypts the first encrypted usage condition information using the generated intermediate usage condition key, to generate intermediate usage condition information, (d) encrypts the intermediate usage condition information, using the medium unique key, to generate second encrypted usage condition information, and (e) writes the generated second encrypted usage condition information to the information storage area,
the reading unit further reads the second encrypted usage condition information from the information storage area,
the decryption unit further decrypts the second encrypted usage condition information, based on the medium unique key, to generate decrypted usage condition information, and
the playback unit further judges, based on the generated decrypted usage condition information, whether playback of the generated decrypted content is permitted, and plays back the decrypted content only when playback is judged to be permitted.

27. The playback apparatus of Claim 26,
wherein the usage condition information includes at least one of information that limits a number of times the decrypted content is played back, information that limits a period in which the decrypted content is played back, and information that limits an accumulated amount of time that the decrypted content is played back, and
the playback unit judges whether playback of the decrypted content is permitted, based on the one or more of the information that limits a number of times the decrypted content is played back, the information that limits a period in which the decrypted content is played back, and the information that limits an accumulated amount of time that the decrypted content is played back.

28. The playback apparatus of Claim 25, further comprising:
an authentication unit operable perform mutual device authentication with the recording medium apparatus,
the key obtaining unit obtains only when authentication succeeds, and
the reading unit reads only when the authentication succeeds.

29. The playback apparatus of Claim 28, wherein
the transmission apparatus encrypts, as the digital information, at least one of a content key and a usage condition, based on a distribution key, to generate the first encrypted information, and transmits the generated first encrypted information to the reception apparatus via the network,
the recording medium apparatus obtains the first encrypted information via the reception apparatus, and
the decryption unit decrypts the read second encrypted information, based on the obtained medium unique key, to generate the decrypted digital information that is at least one of a content key and a usage condition.

## Patentansprüche

1. Tragbare Aufzeichnungsmedienvorrichtung, auf die digitale Informationen, die von einer Sendevorrichtung gesendet werden, über eine Empfangsvorrichtung aufgezeichnet werden, wobei die Aufzeichnungsmedienvorrichtung mit der Empfangsvorrichtung verbunden ist und die Sendevorrichtung Originalinhalt, bei dem es sich um digitale Informationen handelt, auf Basis eines Verteilungs-Verschlüsselungsschlüssels verschlüsselt, um erste verschlüsselte Informationen zu erzeugen, und die erzeugten ersten verschlüsselten Informationen über ein Netzwerk zu der Empfangsvorrichtung sendet, wobei die Aufzeichnungsmedienvorrichtung umfasst:
eine Informationsspeichereinheit, die einen Informationsspeicherbereich enthält; und
eine manipulationssichere Moduleinheit, die enthält:
eine Schlüsselspeicher-Teileinheit, die so betrieben werden kann, dass sie im Voraus einen Verteilungs-Entschlüsselungsschlüssel und einen für ein Medium einmaligen Schlüssel speichert, der einmalig für die Aufzeichnungsmedienvorrichtung ist;
eine Erfassungs-Teileinheit, die so betrieben werden kann, dass sie die gesendeten ersten verschlüsselten Informationen über die Empfangsvorrichtung erfasst;
eine Entschlüsselungs-Teileinheit, die so betrieben werden kann, dass sie die ersten verschlüsselten Informationen auf Basis des Verteilungs-Entschlüsselungsschlüssels entschlüsselt, um Zwischeninformationen zu erzeugen;
eine Verschlüsselungs-Teileinheit, die so betrieben werden kann, dass sie die Zwischeninformationen auf Basis des für das Medium einmaligen Schlüssels verschlüsselt, um zweite verschlüsselte Informationen zu erzeugen; und
eine Schreib-Teileinheit, die so betrieben werden kann, dass sie die erzeugten zweiten verschlüsselten Informationen in die Informationsspeichereinheit schreibt.

2. Aufzeichnungsmedienvorrichtung nach Anspruch 1, wobei
die Sendevorrichtung auf Basis eines Verteilungsschlüssels als die digitalen Informationen Originalinhalt verschlüsselt, bei dem es sich um ein digitales Werk handelt, um die ersten verschlüsselten Informationen zu erzeugen, und die erzeugten ersten verschlüsselten Informationen über das Netzwerk zu der Empfangsvorrichtung sendet, und
die Aufzeichnungsmedienvorrichtung die ersten verschlüsselten Informationen über die Empfangsvorrichtung erfasst.

3. Aufzeichnungsmedienvorrichtung nach Anspruch 2, wobei die Sendevorrichtung des Weiteren (a) Nutzungsbedingungsinformationen, die Bedingungen für die Nutzung des digitalen Werks anzeigen, und einen Original-Nutzungsbedingungsschlüssel speichert, der einmalig für die Nutzungsbedingungsinformationen ist, (b) den Original-Nutzungsbedingungsschlüssel unter Verwendung des Verteilungs-Verschlüsselungsschlüssels verschlüsselt, um einen ersten verschlüsselten Nutzungsbedingungsschlüssel zu erzeugen, (c) die Nutzungsbedingungsinformationen unter Verwendung des Original-Nutzungsbedingungsschlüssels verschlüsselt, um erste verschlüsselte Nutzungsbedingungsinformationen zu erzeugen, und (d) den ersten verschlüsselten Nutzungsbedingungsschlüssel und die ersten verschlüsselten Nutzungsbedingungsinformationen über das Netzwerk zu der Empfangsvorrichtung sendet,
die Erfassungs-Teileinheit des Weiteren den ersten verschlüsselten Nutzungsbedingungsschlüssel und die ersten verschlüsselten Nutzungsbedingungsinformationen über die Empfangsvorrichtung erfasst,
die Entschlüsselungs-Teileinheit des Weiteren den ersten verschlüsselten Nutzungsbedingungsschlüssel unter Verwendung des Verteilungsschlüssels entschlüsselt, um einen Zwischen-Nutzungsbedingungsschlüssel zu erzeugen, und die ersten verschlüsselten Nutzungsbedingungsinformationen unter Verwendung des erzeugten Zwischen-Nutzungsbedingungsschlüssels entschlüsselt, um Zwischen-Nutzungsbedingungsinformationen zu erzeugen,
die Entschlüsselungs-Teileinheit des Weiteren die Zwischen-Nutzungsbedingungsinformationen unter Verwendung des für das Medium einmaligen Schlüssels verschlüsselt, um zweite verschlüsselte Nutzungsbedingungsinformationen zu erzeugen, und
die Schreib-Teileinheit des Weiteren die erzeugten zweiten verschlüsselten Nutzungsbedingungsinformationen schreibt.

4. Aufzeichnungsmedienvorrichtung nach Anspruch 3, wobei
die Sendevorrichtung (a) im Voraus Originalinhalt und einen Original-Inhaltschlüssel speichert, der einmalig für den Originalinhalt ist, (b) den Verteilungs-Verschlüsselungsschlüssel erfasst, der beim Verteilen von digitalem Inhalt verwendet wird, (c) den Originalinhalt unter Verwendung des Original-Inhaltschlüssels verschlüsselt, um verschlüsselten Inhalt zu erzeugen, (d) den Original-Inhaltschlüssel unter Verwendung des erfassten Verteilungs-Verschlüsselungsschlüssels verschlüsselt, um einen ersten verschlüsselten Inhaltschlüssel zu erzeugen, und (e) die ersten verschlüsselten Informationen sendet, die den erzeugten verschlüsselten Inhalt und den ersten verschlüsselt Inhaltschlüssel enthalten,
die Erfassungs-Teileinheit die erfassten ersten verschlüsselten Informationen erfasst,
die Entschlüsselungseinheit den ersten verschlüsselten Inhaltschlüssel unter Verwendung des Verteilungs-Entschlüsselungsschlüssels entschlüsselt, um einen Zwischen-Inhaltschlüssel zu erzeugen, und Zwischeninformationen erzeugt, die den verschlüsselten Inhalt und den erzeugten Zwischen-Inhaltschlüssel enthalten,
die Verschlüsselungseinheit den Zwischen-Inhaltschlüssel, der in den Zwischeninformationen enthalten ist, unter Verwendung des für das Medium einmaligen Schlüssels verschlüsselt, um einen zweiten Inhaltschlüssel zu erzeugen, und zweite verschlüsselte Informationen erzeugt, die den in den Zwischeninformationen enthaltenen verschlüsselten Inhalt und den zweiten verschlüsselten Inhaltschlüssel enthalten, und
die Schreib-Teileinheit, die zweiten verschlüsselten Informationen schreibt.

5. Aufzeichnungsmedienvorrichtung nach Anspruch 4,
wobei die Sendevorrichtung des Weiteren den Verteilungs-Verschlüsselungsschlüssel, der ein öffentlicher Schlüssel ist, der unter Verwendung eines Algorithmus zur Erzeugung eines öffentlichen Schlüssels erzeugt wird, auf Basis eines Verteilungs-Entschlüsselungsschlüssels erfasst, der ein geheimer Schlüssel ist, und Verschlüsselung entsprechend einem Algorithmus zur Verschlüsselung mit öffentlichem Schlüssel unter Verwendung eines Verteilungs-Verschlüsselungsschlüssels durchführt, der ein öffentlicher Schlüssel ist, und
die Entschlüsselungs-Teileinheit Entschlüsselung entsprechend einem Algorithmus zur Entschlüsselung mit öffentlichem Schlüssel unter Verwendung eines Ver teilungs-Entschlüsselungsschlüssels durchführt.

6. Aufzeichnungsmedienvorrichtung nach Anspruch 3,
wobei die manipulationssichere Moduleinheit des Weiteren enthält:
eine Umwandlungs-Teileinheit, die so betrieben werden kann, dass sie ein Format der Zwischeninformationen von einem Verteilungs-Datenformat in ein Aufzeichnungs-Datenformat umwandelt, um Aufzeichnungs-Zwischeninformationen zu erzeugen,
wobei die Verschlüsselungs-Teileinheit die Aufzeichnungs-Zwischeninformationen statt der Zwischeninformationen verschlüsselt.

7. Aufzeichnungsmedienvorrichtung nach Anspruch 6,
wobei die Sendevorrichtung im Voraus Aktualisierungsinformationen zum Aktualisieren der manipulationssicheren Moduleinheit der Aufzeichnungsmedienvorrichtung speichert, die Aktualisierungsinformationen liest und die gelesenen Aktualisierungsinformationen über das Netzwerk und die Empfangsvorrichtung zu der Aufzeichnungsmedienvorrichtung sendet,
die manipulationssichere Moduleinheit einen Mikroprozessor und einen Halbleiter speicher enthält, der ein Computerprogramm speichert, und Komponenten der manipulationssicheren Moduleinheit entsprechend dem Mikroprozessor arbeiten, der entsprechend dem Computerprogramm arbeitet,
die Erfassungs-Teileinheit die Aktualisierungsinformationen über die Empfangsvorrichtung erfasst, und
die manipulationssichere Moduleinheit des Weiteren enthält:
eine Aktualisierungs-Teileinheit, die so betrieben werden kann, dass sie das Computerprogramm unter Verwendung der erfassten Aktualisierungsinformationen aktualisiert, so dass die in der manipulationssicheren Moduleinheit enthaltenen Komponenten aktualisiert werden.

8. Aufzeichnungsmedienvorrichtung nach Anspruch 7,
wobei die Sendevorrichtung des Weiteren die Aktualisierungsinformationen liest, einen Hash-Algorithmus auf die gelesenen Aktualisierungsinformationen anwendet, um einen ersten Hash-Wert zu erzeugen, und den erzeugten Hash-Wert über das Netzwerk und die Empfangsvorrichtung sicher zu der Aufzeichnungsmedienvorrichtung sendet,
die manipulationssichere Moduleinheit des Weiteren enthält:
einen Hash-Teileinheit, die so betrieben werden kann, dass sie den Hash-Algorithmus auf die erfassten Aktualisierungsinformationen anwendet, um einen zweiten Hash-Wert zu erzeugen; und
eine Vergleichsfeststell-Teileinheit, die so betrieben werden kann, dass sie feststellt, ob der erfasste erste Hash-Wert und der erzeugte zweite Hash-Wert übereinstimmen, und
die Aktualisierungs-Teileinheit nur dann aktualisiert, wenn die Vergleichsfeststell-Teileinheit feststellt, dass der erste Hash-Wert und der zweite Hash-Wert übereinstimmen.

9. Aufzeichnungsmedienvorrichtung nach Anspruch 8,
wobei die durch die Sendevorrichtung gespeicherten Aktualisierungsinformationen Informationen zum Aktualisieren wenigstens eines (a) Verschlüsselungsverfahrens, (b) eines Entschlüsselungs- oder (c) eines Umwandlungsverfahrens, das von der manipulationssicheren Moduleinheit verwendet wird, um ein Verteilungs-Datenformat in ein Aufzeichnungs-Datenformat umzuwandeln, in der manipulationssicheren Moduleinheit enthalten,
die Sendevorrichtung die Aktualisierungsinformationen sendet,
die Erfassungs-Teileinheit die Aktualisierungsinformationen über die Empfangsvorrichtung erfasst, und
die Aktualisierungs-Teileinheit das Computerprogramm unter Verwendung der erfassten Aktualisierungsinformationen aktualisiert, so dass wenigstens die Verschlüsselungs-Teileinheit, die Entschlüsselungs-Teileinheit oder die Umwandlungs-Teileinheit in dem manipulationssicheren Modul aktualisiert wird.

10. Aufzeichnungsmedienvorrichtung nach Anspruch 3,
wobei die Sendevorrichtung des Weiteren (a) Nutzungsbedingungsinformationen speichert, die Bedingungen zur Nutzung des digitalen Werks anzeigen, (b) die Nutzungsbedingungsinformationen liest, (c) einen Hash-Algorithmus auf die gelesenen Nutzungsbedingungsinformationen anwendet, um einen Hash-Wert zu erzeugen, und (d) den erzeugten Hash-Wert sowie die gelesenen Nutzungsbedingungen sicher über das Netzwerk sendet,
die Erfassungseinheit des Weiteren den gesendeten ersten Hash-Wert und die gesendeten Nutzungsbedingungsdaten über die Empfangsvorrichtung erfasst,
die manipulationssichere Moduleinheit des Weiteren enthält:
eine Hash-Teileinheit, die so betrieben werden kann, dass sie den Hash-Algorithmus auf die erfassten Nutzungsbedingungsinformationen anwendet, um einen zweiten Hash-Wert zu erzeugen; und
eine Vergleichsfeststell-Teileinheit, die so betrieben werden kann, dass sie feststellt, ob der erfasste erste Hash-Wert und der erzeugte zweite Hash-Wert übereinstimmen,
die Verschlüsselungs-Teileinheit nur verschlüsselt, wenn die Vergleichsfeststellseinheit feststellt, dass der erste Hash-Wert und der zweite Hash-Wert übereinstimmen, und
die Schreib-Teileinheit nur schreibt, wenn die Vergleichsfeststelleinheit feststellt, dass der erste Hash-Wert und der zweite Hash-Wert übereinstimmen.

11. Aufzeichnungsmedienvorrichtung nach Anspruch 3,
wobei die Sendevorrichtung des Weiteren mit der Aufzeichnungsmedienvorrichtung gegenseitige Geräte-Authentisierung durchführt, den Verteilungs-Verschlüsselungsschlüssel erfasst und nur verschlüsselt und sendet, wenn die Authentisierung erfolgreich ist,
die manipulationssichere Moduleinheit des Weiteren enthält:
eine Authentisierungs-Teileinheit, die so betrieben werden kann, dass sie mit der Sendevorrichtung gegenseitig Geräte-Authentizität authentisiert,
die Erfassungs-Teileinheit nur erfasst, wenn die Authentisierung erfolgreich ist,
die Entschlüsselungs-Teileinheit nur entschlüsselt, wenn die Authentisierung erfolgreich ist,
die Verschlüsselungs-Teileinheit nur verschlüsselt, wenn die Authentisierung erfolgreich ist, und
die Schreib-Teileinheit nur schreibt, wenn die Authentisierung erfolgreich ist.

12. Aufzeichnungsmedienvorrichtung nach Anspruch 3, die mit der Wiedergabevor richtung verbunden ist, wobei die Wiedergabevorrichtung Informationen aus der Informationsspeichereinheit liest,
wobei die manipulationssichere Moduleinheit des Weiteren enthält:
eine Authentisierungs-Teileinheit, die so betrieben werden kann, dass sie mit der Wiedergabevorrichtung gegenseitige Geräte-Authentisierung durchführt und die Wiedergabevorrichtung Informationen nur lesen lässt, wenn die Authentisierung erfolgreich ist.

13. Aufzeichnungsmedienvorrichtung nach Anspruch 3,
wobei die Entschlüsselungs-Teileinheit im Voraus mit einer Vielzahl von Entschlüsselungsverfahren ausgestattet wird, und unter Verwendung eines Entschlüsselungsverfahrens entschlüsselt, dass aus der Vielzahl von Entschlüsselungsverfahren ausgewählt wird, und das ausgewählte Entschlüsselungsverfahren eine inverse Umwandlung eines Verschlüsselungsverfahrens ist, das in der Sendevorrichtung verwendet wird, und
die Verschlüsselungs-Teileinheit im Voraus mit einer Vielzahl von Verschlüsselungsverfahren versehen wird und unter Verwendung eines Verschlüsselungsverfahrens verschlüsselt, das aus der Vielzahl von Verschlüsselungsverfahren ausgewählt wird.

14. Aufzeichnungsmedienvorrichtung nach Anspruch 3,
wobei die Schlüsselspeicher-Teileinheit eine Vielzahl von Verteilungs-Entschlüsselungsschlüsselkandidaten speichert und ein Verteilungs-Entschlüsselungsschlüsselkandidat aus der Vielzahl von Verteilungs-Entschlüsselungsschlüsselkandidaten als der Verteilungs-Entschlüsselungsschlüssel ausgewählt wird, und
die Entschlüsselungs-Teileinheit den ausgewählten Verteilungs-Entschlüsselungsschlüssel verwendet.

15. Aufzeichnungsmedienvorrichtung nach Anspruch 3,
wobei die manipulationssichere Moduleinheit durch Software, Hardware und eine Kombination aus Software oder Hardware manipulationssicher gemacht wird.

16. Aufzeichnungsmedienvorrichtung nach Anspruch 1, wobei
die Sendevorrichtung als die digitalen Informationen wenigstens einen Inhaltsschlüssel oder eine Nutzungsbedingung auf Basis eines Verteilungsschlüssels verschlüsselt, um die ersten verschlüsselten Informationen zu erzeugen, und die erzeugten ersten verschlüsselten Informationen über das Netzwerk zu der Empfangsvorrichtung sendet, und
die Aufzeichnungsmedienvorrichtung die ersten verschlüsselten Informationen über die Empfangsvorrichtung erfasst.

17. Aufzeichnungsmedienvorrichtung nach Anspruch 16, wobei
die manipulationssichere Moduleinheit des Weiteren enthält:
eine Umwandlungs-Teileinheit, die so betrieben werden kann, dass sie ein Format der Zwischeninformationen von einem Verteilungs-Datenformat in ein Aufzeichnungs-Datenformat umwandelt, um Aufzeichnungs-Zwischeninformationen zu erzeugen,
wobei die Verschlüsselungs-Teileinheit die Aufzeichnungs-Zwischeninformationen anstelle der Zwischeninformationen verschlüsselt.

18. System zum Schutz digitaler Informationen nach einem der Ansprüche 1-17, bei dem durch eine Sendevorrichtung gesendete digitale Informationen über eine Empfangsvorrichtung auf eine tragbare Aufzeichnungsmedienvorrichtung geschrieben werden und durch eine Wiedergabevorrichtung wiedergegeben werden, das umfasst:
die Sendevorrichtung, die so betrieben werden kann, dass sie digitale Informationen auf Basis eines Verteilungs-Verschlüsselungsschlüssels verschlüsselt, um erste verschlüsselte Informationen zu erzeugen, und die erzeugten ersten verschlüsselten Informationen über ein Netzwerk sendet;
die Empfangsvorrichtung, die so betrieben werden kann, dass sie in einem Zustand, in dem die Aufzeichnungsmedienvorrichtung mit der Empfangsvorrichtung verbunden ist, die ersten verschlüsselten Informationen über das Netzwerk empfängt, und die empfangenen ersten verschlüsselten Informationen an die Aufzeichnungsmedienvorrichtung ausgibt;
die Aufzeichnungsmedienvorrichtung nach einem der Ansprüche 1-17;
die Wiedergabevorrichtung, die so betrieben werden kann, dass sie in einem Zustand, in dem die Aufzeichnungsmedienvorrichtung, in die die zweiten verschlüsselten Informationen geschrieben worden sind, mit der Wiedergabevorrichtung verbunden ist, (a) die zweiten verschlüsselten Informationen aus dem Informationsspeicherbereich liest, (b) den für das Medium einmaligen Schlüssel sicher liest, (c) die gelesenen zweiten verschlüsselten Informationen auf Basis des für das Medium einmaligen Schlüssels entschlüsselt, um entschlüsselte digitale Informationen zu erzeugen, und (d) die entschlüsselten digitalen Informationen wiedergibt.

19. System zum Schutz digitaler Informationen nach Anspruch 18, wobei
die Sendevorrichtung als die digitalen Informationen Originalinhalt, bei dem es sich um ein digitales Werk handelt, auf Basis eines Verteilungsschlüssels verschlüsselt, um die ersten verschlüsselten Informationen zu erzeugen, und die erzeugten ersten verschlüsselten Informationen über das Netzwerk zu der Empfangsvorrichtung sendet, und
die Aufzeichnungsmedienvorrichtung die ersten verschlüsselten Informationen über die Empfangsvorrichtung erfasst.

20. System zum Schutz digitaler Informationen nach Anspruch 19,
wobei die Sendevorrichtung (a) im Voraus Originalinhalt und einen Original-Inhaltschlüssei speichert, der einmalig für den Originalinhalt ist, (b) den Verteilungs-Verschlüsselungsschlüssel erfasst, der beim Verteilen von digitalem Inhalt verwendet wird, (c) den Originalinhalt unter Verwendung des Original-Inhaltschlüssels verschlüsselt, um verschlüsselten Inhalt zu erzeugen, (d) den Original-Inhaltschlüssel unter Verwendung des erfassten Verteilungs-Verschlüsselungsschlüssels verschlüsselt, um einen ersten verschlüsselten Inhaltsschlüssel zu erzeugen, und (e) die ersten verschlüsselten Informationen sendet, die den erzeugten verschlüsselten Inhalt und den ersten verschlüsselten Inhaltschlüssel enthalten,
die Empfangsvorrichtung die ersten verschlüsselten Informationen empfängt und die empfangenen ersten verschlüsselten Informationen ausgibt,
die manipulationssichere Moduleinheit (a) im Voraus den Verteilungs-Entschlüsselungsschlüssel und den für das Medium einmaligen Schlüssel speichert, (b) die ausgegebenen ersten verschlüsselten Informationen erfasst, (c) den ersten verschlüsselten Inhaltschlüssel unter Verwendung des Verteilungs-Entschlüsselungsschlüssels entschlüsselt, um einen Zwischen-Inhaltschlüssel zu erzeugen, (d) den erzeugten Zwischen-Inhaltschlüssel unter Verwendung des für das Medium einmaligen Schlüssels verschlüsselt, um einen zweiten verschlüsselten Inhaltschlüssel zu erzeugen, und (e) die zweiten verschlüsselten Informationen, die den erfassten verschlüsselten Inhalt und den zweiten verschlüsselten Inhaltschlüssel enthalten, in den Informationsspeicherbereich schreibt, und
die Wiedergabevorrichtung (a) den für das Medium einmaligen Schlüssel aus der Aufzeichnungsmedienvorrichtung sicher erfasst, (b) die zweiten verschlüsselten Informationen, die den verschlüsselten Inhalt und den zweiten verschlüsselten Inhaltschlüssel enthalten, aus dem Informationsspeicherbereich liest, (c) den zweiten verschlüsselten Inhaltschlüssel unter Verwendung des erfassten für das Medium einmaligen Schlüssels entschlüsselt, um einen entschlüsselten Inhaltschlüssel zu erzeugen, und (d) den gelesenen verschlüsselten Inhalt unter Verwendung des erzeugten entschlüsselten Inhaltschlüssels entschlüsselt, um entschlüsselten Inhalt zu erzeugen.

21. System zum Schutz digitaler Informationen nach Anspruch 18, wobei
die Sendevorrichtung als die digitalen Informationen wenigstens einen Inhaltschlüssel oder eine Nutzungsbedingung auf Basis eines Verteilungsschlüssels verschlüsselt, um die ersten verschlüsselten Informationen zu erzeugen, und die ersten verschlüsselten Informationen über das Netzwerk zu der Empfangsvorrichtung sendet, und
die Aufzeichnungsmedienvorrichtung die ersten verschlüsselten Informationen über die Empfangsvorrichtung erfasst.

22. System zum Schutz digitaler Informationen, das aus einer Sendevorrichtung, die ein digitales Werk sendet, einer Empfangsvorrichtung, die das gesendete digitale Werk über ein Netzwerk empfängt und das empfangene digitale Werk auf einer tragbaren Aufzeichnungsmedienvorrichtung aufzeichnet, einer Wiedergabevorrichtung, die das digitale Werk wiedergibt, das in der Aufzeichnungsmedienvorrichtung aufgezeichnet ist, und der Aufzeichnungsmedienvorrichtung nach einem der Ansprüche 1-17 zusammengesetzt ist,
wobei die Sendevorrichtung umfasst:
eine Speichereinheit, die so betrieben werden kann, dass sie im Voraus Originalinhalt, bei dem es sich um das digitale Werk handelt, und einen Original-Inhaltschlüssel speichert, der einmalig für den Originalinhalt ist;
eine Verteilungs-Verschlüsselungsschiüssel-Erfassungseinheit, die so betrieben werden kann, dass sie einen Verteilungs-Verschlüsselungsschlüssel erfasst, der bei der Verteilung des digitalen Werkes verwendet wird;
eine Verschlüsselungseinheit, die so betrieben werden kann, dass sie den Originalinhalt unter Verwendung des Original-Inhaltschlüssels verschlüsselt, um verschlüsselten Inhalt zu erzeugen, und den Original-Inhaltschlüsset unter Verwendung des erfassten Verteilungs-Verschlüsselungsschlüssels verschlüsselt, um einen ersten verschlüsselten Inhaltschlüssel zu erzeugen; und
eine Sendeeinheit, die so betrieben werden kann, dass sie den verschlüsselten Inhalt und den ersten verschlüsselten Inhaltschlüssel über ein Netzwerk sendet;
wobei die Empfangsvorrichtung in einem Zustand, in dem die Aufzeichnungsmedienvorrichtung damit verbunden ist, umfasst:
eine Empfangseinheit, die so betrieben werden kann, dass sie den verschlüsselten Inhalt und den ersten verschlüsselt Inhaltschlüssel über das Netzwerk empfängt; und
eine Ausgabeeinheit, die so betrieben werden kann, dass sie den empfangenen verschlüsselten Inhalt und den empfangenen ersten verschlüsselten Inhaltschlüssel ausgibt,
die Wiedergabevorrichtung in einem Zustand, in dem die Aufzeichnungsmedienvorrichtung, in die der verschlüsselte Inhalt und der zweite verschlüsselte Inhalt geschrieben werden, damit verbunden ist, umfasst:
einen Schlüssel-Erfassungseinheit, die so betrieben werden kann, dass sie den Medien-Originalschlüssel sicher aus der Schlüssel-Speichereinheit erfasst;
eine Leseeinheit, die so betrieben werden kann, dass sie den verschlüsselten Inhalt und den zweiten verschlüsselten Inhaltschlüssel aus der Informationsspeichereinheit liest;
eine Inhaltschlüssel-Entschlüsselungseinheit, die so betrieben werden kann, dass sie den gelesenen zweiten verschlüsselten Inhaltschlüssel unter Verwendung des erfassten für das Medium einmaligen Schlüssels entschlüsselt, um einen entschlüsselten Inhaltschlüssel zu erzeugen;
einen Inhalt-Entschlüsselungseinheit, die so betrieben werden kann, dass sie den gelesenen verschlüsselten Inhalt unter Verwendung des erzeugten entschlüsselten Inhaltschlüssels entschlüsselt, um entschlüsselten Inhalt zu erzeugen; und
eine Wiedergabeeinheit, die so betrieben werden kann, dass sie den erzeugten entschlüsselten Inhalt wiedergibt.

23. Wiedergabevorrichtung, die digitale Informationen wiedergibt, die durch eine Sendevorrichtung über ein Netzwerk und eine Empfangsvorrichtung gesendet werden und auf eine Aufzeichnungsmedienvorrichtung geschrieben werden, wobei die Sendevorrichtung digitale Informationen auf Basis eines Verteilungs-Verschlüsselungsschlüssels verschlüsselt, um erste verschlüsselte Informationen zu erzeugen, und die erzeugten ersten verschlüsselten Informationen in einem Zustand über das Netzwerk zu der Empfangsvorrichtung sendet, in dem die Aufzeichnungsmedienvorrichtung mit der Empfangsvorrichtung verbunden ist,
die Wiedergabevorrichtung umfasst:
die Aufzeichnungsmedienvorrichtung nach einem der Ansprüche 1-17;
eine Schlüssel-Erfassungseinheit, die so betrieben werden kann, dass sie den für das Medium einmaligen Schlüssel sicher aus der Aufzeichnungsmedienvorrichtung bestimmt;
eine Leseeinheit, die so betrieben werden kann, dass sie die zweiten verschlüsselten Informationen aus dem Informationsspeicherbereich liest; und
eine Entschlüsselungseinheit, die so betrieben werden kann, dass sie die gelesenen zweiten verschlüsselten Informationen auf Basis des für das Medium einmaligen Schlüssels entschlüsselt, um entschlüsselte digitale Informationen zu erzeugen.

24. Wiedergabevorrichtung nach Anspruch 23, wobei
die Sendevorrichtung als die digitalen Informationen Originalinhalt verschlüsselt, bei dem es sich um ein digitales Werk handelt, um die ersten verschlüsselten Informationen zu erzeugen,
die Entschlüsselungseinheit die gelesenen zweiten verschlüsselten Informationen auf Basis des erfassten für das Medium einmaligen Schlüssels entschlüsselt, um entschlüsselten Inhalt zu erzeugen, und
die Wiedergabevorrichtung des Weiteren umfasst:
eine Wiedergabeeinheit, die so betrieben werden kann, dass sie den erzeugten entschlüsselten Inhalt wiedergibt.

25. Wiedergabevorrichtung nach Anspruch 24,
wobei die Sendevorrichtung (a) im Voraus Originalinhalt und einen Original-Inhaltschlüssel speichert, der einmalig für den Originalinhalt ist, (b) den Verteilungs-Verschlüsselungsschlüssel erfasst, der beim Verteilen von digitalem Inhalt verwendet wird, (c) den Originalinhalt unter Verwendung des Original-Inhaltschlüssels verschlüsselt, um verschlüsselten Inhalt zu erzeugen, (d) den Original-Inhaltschlüssel unter Verwendung des erfassten Verteilungs-Verschlüsselungsschlüssels verschlüsselt, um einen ersten verschlüsselten Inhaltschlüssel zu erzeugen, und (e) die ersten verschlüsselten Informationen sendet, die den erzeugten verschlüsselten Inhalt und den ersten verschlüsselten Inhaltschlüssel enthalten,
die manipulationssichere Moduleinheit (a) im Voraus den Verteilungs-Entschlüsselungsschlüssel und den für das Medium einmaligen Schlüssel speichert, (b) die ausgegebenen ersten verschlüsselten Informationen erfasst, (c) den ersten verschlüsselten Inhaltschlüssel unter Verwendung des Verteilungs-Entschlüsselungsschlüssels entschlüsselt, um einen Zwischen-Inhaltschlüssel zu erzeugen, (d) den erzeugten Zwischen-Inhaltschlüssel unter Verwendung des für das Medium einmaligen Schlüssels verschlüsselt, um einen zweiten verschlüsselten Inhaltschlüssel zu erzeugen, und (e) die zweiten verschlüsselten Informationen in den Informationsspeicherbereich schreibt,
die Leseeinheit die zweiten verschlüsselten Informationen liest, und
die Entschlüsselungseinheit den gelesenen zweiten verschlüsselten Inhaltschlüssel unter Verwendung des erfassten für das Medium einmaligen Schlüssels entschlüsselt, um einen entschlüsselten Inhaltschlüssel zu erzeugen, und den gelesenen verschlüsselten Inhalt unter Verwendung des erzeugten Entschlüsselungsinhaltschlüssels entschlüsselt, um entschlüsselten Inhalt zu erzeugen.

26. Wiedergabevorrichtung nach Anspruch 25,
wobei die Sendevorrichtung des Weiteren (a) Nutzungsbedingungsinformationen, die Bedingungen zum Nutzen des digitalen Werkes anzeigen, und einen Original-Nutzungsbedingungsschlüssel speichert, der einmalig für die Nutzungsbedingungsinformationen ist, (b) den Original-Nutzungsbedingungsschlüssel unter Verwendung des Verteilungs-Verschlüsselungsschlüssels verschlüsselt, um einen ersten verschlüsselten Nutzungsbedingungsschlüssel zu erzeugen, (c) die Nutzungsbedingungsinformationen unter Verwendung des Original-Nutzungsbedingungsschlüssels verschlüsselt, um erste verschlüsselte Nutzungsbedingungsinformationen zu erzeugen, und (d) den ersten verschlüsselten Nutzungsbedingungsschlüssel und die ersten verschlüsselten Nutzungsbedingungsinformationen über das Netzwerk zu der Empfangsvorrichtung sendet,
die Aufzeichnungsmedienvorrichtung des Weiteren (a) über das Netzwerk den ersten verschlüsselten Nutzungsbedingungsschlüssel und die ersten verschlüsselten Nutzungsbedingungsinformationen erfasst, (b) den ersten verschlüsselten Nutzungsbedingungsschlüssel unter Verwendung des Verteilungs-Entschlüsselungsschlüssels entschlüsselt, um einen Zwischen-Nutzungsbedingungsschlüssel zu erzeugen, (c) die ersten verschlüsselten Nutzungsbedingungsinformationen unter Verwendung des erzeugten Zwischen-Nutzungsbedingungsschlüssels entschlüsselt, um Zwischen-Nutzungsbedingungsinformationen zu erzeugen, (d) die Zwischen-Nutzungsbedingungsinformationen unter Verwendung des für das Medium einmaligen Schlüssels verschlüsselt, um zweite verschlüsselte Nutzungsbedingungsinformationen zu erzeugen, und (e) die erzeugten zweiten verschlüsselten Nutzungsbedingungsinformationen in den Informationsspeicherbereich schreibt
die Leseeinheit des Weiteren die zweiten verschlüsselten Nutzungsbedingungsinformationen aus dem Informationsspeicherbereich liest,
die Entschlüsselungseinheit des Weiteren die zweiten verschlüsselten Nutzungsbedingungsinformationen auf Basis des für das Medium einmaligen Schlüssels entschlüsselt, um entschlüsselte Nutzungsbedingungsinformationen zu erzeugen, und
die Wiedergabeeinheit des Weiteren auf Basis der erzeugten entschlüsselten Nutzungsbedingungsinformationen feststellt, ob Wiedergabe des erzeugten entschlüsselten Inhalts zugelassen wird, und den entschlüsselten Inhalt nur wiedergibt, wenn festgestellt wird, dass Wiedergabe zugelassen wird.

27. Wiedergabevorrichtung nach Anspruch 26,
wobei die Nutzungsbedingungsinformationen wenigstens Informationen, die die Häufigkeit der Wiedergabe des entschlüsselten Inhalts begrenzen, Informationen, die einen Zeitraum begrenzen, in dem der entschlüsselte Inhalt wiedergegeben wird, oder Informationen enthalten, die eine Gesamtzeit begrenzen, über die der entschlüsselte Inhalt wiedergegeben wird, und
die Wiedergabeeinheit auf Basis einer oder mehrerer der Informationen, die eine Häufigkeit der Wiedergabe des entschlüsselten Inhalts begrenzen, der Informationen, die einen Zeitraum begrenzen, in dem der entschlüsselte Inhalt wiedergegeben wird, und der Informationen, die einen Gesamtzeit begrenzen, über die der entschlüsselte Inhalt wiedergegeben wird, feststellt, ob Wiedergabe des entschlüsselten Inhalts zugelassen wird.

28. Wiedergabevorrichtung nach Anspruch 25, dies des Weiteren umfasst:
eine Authentisierungseinheit, die so betrieben werden kann, dass sie mit der Aufzeichnungsmedienvorrichtung gegenseitige Geräte-Authentisierung durchführt,
die Schlüsselermittelungseinheit nur erfasst, wenn die Authentisierung erfolgreich ist, und
die Leseeinheit nur liest, wenn die Authentisierung erfolgreich ist.

29. Wiedergabevorrichtung nach Anspruch 28, wobei
die Sendevorrichtung als die digitalen Informationen wenigstens einen Inhaltschlüssel oder eine Nutzungsbedingung auf Basis eines Verteilungsschlüssels verschlüsselt, um die ersten verschlüsselten Informationen zu erzeugen, und die erzeugten ersten verschlüsselten Informationen über das Netzwerk zu der Empfangsvorrichtung sendet,
die Aufzeichnungsmedienvorrichtung die ersten verschlüsselten Informationen über die Empfangsvorrichtung erfasst, und
die Entschlüsselungseinheit die gelesenen zweiten verschlüsselten Informationen auf Basis des erfassten für das Medium einmaligen Schlüssels entschlüsselt, um die entschlüsselten digitalen Informationen zu erzeugen, bei denen es sich wenigstens um einen Inhaltschlüssel oder eine Nutzungsbedingung handelt.

## Revendications

1. Appareil de support d'enregistrement portable sur lequel est enregistré des informations numériques qui sont transmises depuis un appareil d'émission via un appareil de réception, l'appareil de support d'enregistrement étant connecté à l'appareil de réception, et l'appareil d'émission chiffrant les contenus d'origine qui sont des informations numériques basées sur une clé de chiffrage de distribution, pour générer des premières informations chiffrées, et pour transmettre les premières informations chiffrées générées via un réseau à l'appareil de réception, l'appareil de support d'enregistrement comprenant :
une unité de mémorisation d'informations qui inclut une zone de mémorisation d'informations ; et
une unité de module inviolable incluant :
une sous-unité de mémorisation de clé qui peut être mise en oeuvre pour mémoriser à l'avance une clé de déchiffrage de distribution et une clé unique de support qui est unique à l'appareil de support d'enregistrement ;
une sous-unité d'obtention qui peut être mise en oeuvre pour obtenir les premières informations chiffrées transmises via l'appareil de réception ;
une sous-unité de déchiffrage qui peut être mise en oeuvre pour déchiffrer les premières informations chiffrées, sur la base de la clé de déchiffrage de distribution, pour générer des informations intermédiaires ;
une sous-unité de chiffrage qui peut être mise en oeuvre pour chiffrer les informations intermédiaires, sur la base de la clé unique de support, pour générer des secondes informations chiffrées ; et
une sous-unité d'écriture qui peut être mise en oeuvre pour écrire les secondes informations chiffrées dans l'unité de mémorisation d'informations.

2. Appareil de support d'enregistrement selon la revendication 1, dans lequel
l'appareil d'émission chiffre, comme informations numériques, un contenu d'origine qui est un travail numérique, sur la base d'une clé de distribution pour générer les premières informations chiffrées, et transmet les premières informations chiffrées et générées à l'appareil de réception via le réseau, et
l'appareil de support d'enregistrement obtient les premières informations chiffrées via l'appareil de réception.

3. Appareil de support d'enregistrement selon la revendication 2,
dans lequel l'appareil d'émission (a) mémorise en outre des informations de condition d'usage montrant les conditions pour l'usage du travail numérique, et une clé de condition d'usage d'origine qui est unique aux informations de condition d'usage, (b) chiffre la clé de condition d'usage d'origine, en utilisant la clé de chiffrage de distribution, pour générer une première clé de condition d'usage chiffrée, (c) chiffre les informations de condition d'usage en utilisant la clé de condition d'usage d'origine, pour générer les premières informations de condition d'usage chiffrées, et (d) transmet la première clé de condition d'usage chiffrée et les premières informations de condition d'usage chiffrées via le réseau à l'appareil de réception,
la sous-unité d'obtention obtient, en outre, la première clé de condition d'usage chiffrée et les premières informations de condition d'usage chiffrées via l'appareil de réception,
la sous-unité de déchiffrage déchiffre, en outre, la première clé de condition d'usage chiffrée en utilisant la clé de distribution, pour générer une clé de condition d'usage intermédiaire, et déchiffre les premières informations de condition d'usage chiffrées en utilisant la clé de condition d'usage intermédiaire générée, pour générer des informations de condition d'usage intermédiaires,
la sous-unité de chiffrage chiffre, en outre, les informations de condition d'usage intermédiaires en utilisant la clé unique de support, pour générer des secondes informations de condition d'usage chiffrées, et
la sous-unité d'écriture écrit, en outre, les secondes informations de condition d'usage chiffrées.

4. Appareil de support d'enregistrement selon la revendication 3, dans lequel
l'appareil d'émission (a) mémorise à l'avance un contenu d'origine, et une clé de contenu d'origine qui est unique au contenu d'origine, (b) obtient la clé de chiffrage de distribution qui est utilisée dans la distribution du contenu numérique, (c) chiffre le contenu d'origine en utilisant la clé de contenu d'origine, pour générer un contenu chiffré, (d) déchiffre la clé de contenu d'origine en utilisant la clé de chiffrage de distribution obtenue, pour générer une première clé de contenu chiffré, et (d) transmet les premières informations chiffrées qui incluent le contenu chiffré généré et la première clé de contenu chiffrée,
la sous-unité d'obtention obtient les premières informations chiffrées obtenues,
l'unité de déchiffrage déchiffre la première clé de contenu chiffré en utilisant la clé de déchiffrage de distribution, pour générer une clé de contenu intermédiaire, et génère les informations intermédiaires qui incluent le contenu chiffré et la clé de contenu intermédiaire générée,
l'unité de chiffrage chiffre la clé de contenu intermédiaire incluse dans les informations intermédiaires, en utilisant la clé unique de support, pour générer une seconde clé de contenu, et génère les secondes informations chiffrées qui incluent le contenu chiffré inclus dans les informations intermédiaires et la seconde clé de contenu chiffré, et
la sous-unité d'écriture écrit les secondes informations chiffrées.

5. Appareil de support d'enregistrement selon la revendication 4,
dans lequel l'appareil d'émission obtient, en outre, la clé de chiffrage de distribution, qui est une clé publique générée en utilisant un algorithme de génération de clé publique, basée sur une clé de déchiffrage de distribution qui est une clé secrète, et effectue le chiffrage en conformité avec l'algorithme de chiffrage de clé publique en utilisant une clé de chiffrage de distribution qui est une clé publique, et
la sous-unité de déchiffrage effectue le déchiffrage en conformité avec un algorithme de déchiffrage de clé publique en utilisant une clé de déchiffrage de distribution.

6. Appareil de support d'enregistrement selon la revendication 3,
dans lequel l'unité de module inviolable inclut en outre :
une sous-unité de conversion pouvant être mise en oeuvre pour convertir un format des informations intermédiaires depuis un format de données de distribution en un format de données d'enregistrement, pour générer des informations intermédiaires d'enregistrement,
dans lequel la sous-unité de chiffrage chiffre les informations intermédiaires d'enregistrement à la place des informations intermédiaires.

7. Appareil de support d'enregistrement selon la revendication 6,
dans lequel l'appareil d'émission mémorise à l'avance les informations de mise à jour pour mettre à jour l'unité de module inviolable de l'appareil de support d'enregistrement, lit les informations de mise à jour et transmet les informations de mise à jour lues à l'appareil de support d'enregistrement via le réseau et l'appareil de réception,
l'unité de module inviolable inclut un microprocesseur et une mémoire à semi-conducteur qui mémorise un programme d'ordinateur, et des éléments constitutifs de l'unité de module inviolable opèrent en conformité avec le microprocesseur exécutant en conformité avec le programme d'ordinateur,
la sous-unité d'obtention obtient les informations de mise à jour via l'appareil de réception, et
l'unité de module inviolable inclut en outre :
une sous-unité de mise à jour pouvant être mise en oeuvre pour mettre à jour le programme d'ordinateur en utilisant les informations de mise à jour obtenues, aboutissant à ce que les éléments constitutifs inclus dans l'unité de module inviolable soient mis à jour.

8. Appareil de support d'enregistrement selon la revendication 7,
dans lequel l'appareil d'émission lit, en outre, les informations de mise à jour, applique un algorithme hash aux informations de mise à jour lues pour générer une première valeur hash, et transmet de manière sûre la valeur hash générée à l'appareil de support d'enregistrement via le réseau et l'appareil de réception,
l'unité de module inviolable inclut en outre :
une sous-unité hash pouvant être mise en oeuvre pour appliquer l'algorithme hash aux informations de mise à jour obtenues, pour générer une seconde valeur hash ; et
une sous-unité de jugement de comparaison pouvant être mise en oeuvre pour juger si la première valeur hash obtenue et la seconde valeur hash générée correspondent, et
la sous-unité de mise à jour ne met à jour que lorsque la sous-unité de jugement de comparaison juge que la première valeur hash et la seconde valeur hash correspondent.

9. Appareil de support d'enregistrement selon la revendication 8,
dans lequel les informations de mise à jour mémorisées par l'appareil d'émission incluent des informations pour la mise à jour dans l'unité de module inviolable d'au moins un de (a) un procédé de chiffrage, (b) un procédé de déchiffrage et (c) un procédé de conversion utilisé par l'unité de module inviolable pour convertir un format de données de distribution en un format de données d'enregistrement,
l'appareil d'émission transmet les informations de mise à jour,
la sous-unité d'obtention obtient les informations de mise à jour via l'appareil de réception, et
la sous-unité de mise à jour met à jour le programme d'ordinateur en utilisant les informations de mise à jour obtenues, aboutissant à ce qu'au moins un de la sous-unité de chiffrage, de la sous-unité de déchiffrage et de la sous-unité de conversion dans le module inviolable soit mis à jour.

10. Appareil de support d'enregistrement selon la revendication 3,
dans lequel l'appareil d'émission en outre (a) mémorise des informations de condition d'usage qui montrent les conditions pour l'usage du travail numérique, (b) lit les informations de condition d'usage, (c) applique un algorithme hash aux informations de condition d'usage lues, pour générer une valeur hash et (d) transmet de manière sûre la valeur hash générée et les informations de condition d'usage lues via le réseau,
l'unité d'obtention obtient, en outre, la première valeur hash transmise et les données de condition d'usage transmises via l'appareil de réception,
l'unité de module inviolable inclut en outre :
une sous-unité hash pouvant être mise en oeuvre pour appliquer l'algorithme hash aux informations de condition d'usage obtenues, pour générer une seconde valeur hash, et
une sous-unité de jugement de comparaison pouvant être mise en oeuvre pour juger si la première valeur hash obtenue et la seconde valeur hash générée correspondent,
la sous-unité de chiffrage ne chiffre que lorsque l'unité de jugement de comparaison juge que la première valeur hash et la seconde valeur hash correspondent, et
la sous-unité d'écriture n'écrit que lorsque l'unité de jugement de comparaison juge que la première valeur hash et la seconde valeur hash correspondent.

11. Appareil de support d'enregistrement selon la revendication 3,
dans lequel l'appareil d'émission effectue, en outre, une authentification de dispositif mutuelle avec l'appareil de support d'enregistrement, obtient la clé de chiffrage de distribution, et ne chiffre et ne transmet que lorsque l'authentification est satisfaisante,
l'unité de module inviolable inclut en outre :
une sous-unité d'authentification pouvant être mise en oeuvre pour authentifier mutuellement l'authenticité du dispositif avec l'appareil d'émission,
la sous-unité d'obtention obtient seulement lorsque l'authentification est satisfaisante,
la sous-unité de déchiffrage ne déchiffre que lorsque l'authentification est satisfaisante,
la sous-unité de chiffrage ne chiffre que lorsque l'authentification est satisfaisante, et
la sous-unité d'écriture n'écrit que lorsque l'authentification est satisfaisante.

12. Appareil de support d'enregistrement selon la revendication 3, étant connecté à l'appareil de reproduction, et l'appareil de reproduction lisant les informations de l'unité de mémorisation d'informations,
dans lequel l'unité de module inviolable inclut en outre :
une sous-unité d'authentification pouvant être mise en oeuvre pour effectuer une authentification de dispositif mutuelle avec l'appareil de reproduction, et permet à l'appareil de reproduction de lire les informations seulement lorsque l'authentification est satisfaisante.

13. Appareil de support d'enregistrement selon la revendication 3,
dans lequel la sous-unité de déchiffrage est munie à l'avance d'une pluralité de procédés de déchiffrage, et déchiffre en utilisant un procédé de déchiffrage choisi parmi la pluralité de procédés de déchiffrage, le procédé de déchiffrage choisi étant une conversion inverse d'un procédé de chiffrage utilisé dans l'appareil d'émission, et
la sous-unité de chiffrage est munie à l'avance d'une pluralité de procédés de chiffrage, et chiffre en utilisant un procédé de chiffrage choisi parmi la pluralité de procédés de chiffrage.

14. Appareil de support d'enregistrement selon la revendication 3,
dans lequel la sous-unité de mémorisation de clé mémorise une pluralité de candidates de clé de déchiffrage de distribution, et une clé de déchiffrage de distribution candidate est choisie parmi la pluralité de candidates de clé de déchiffrage de distribution comme clé de déchiffrage de distribution, et
la sous-unité de déchiffrage utilise la clé de déchiffrage de distribution choisie.

15. Appareil de support d'enregistrement selon la revendication 3,
dans lequel l'unité de module inviolable est rendue inviolable en conformité avec soit un logiciel, soit des circuits, soit une combinaison de logiciel et de circuits.

16. Appareil de support d'enregistrement selon la revendication 1, dans lequel
l'appareil d'émission chiffre, comme informations numériques, au moins une clé de contenu et une condition d'usage, basé sur la clé de distribution, pour générer les premières informations chiffrées, et transmet les premières informations chiffrées générées à l'appareil de réception via le réseau, et
l'appareil de support d'enregistrement obtient les premières informations chiffrées via l'appareil de réception.

17. Appareil de support d'enregistrement selon la revendication 16, dans lequel
l'unité de module inviolable inclut en outre :
une sous-unité de conversion pouvant être mise en oeuvre pour convertir un format des informations intermédiaires depuis un format de données de distribution en un format de données d'enregistrement, pour générer des informations intermédiaires d'enregistrement,
dans lequel la sous-unité de chiffrage chiffre les informations intermédiaires d'enregistrement à la place des informations intermédiaires.

18. Système de protection d'informations numériques selon l'une quelconque des revendications 1 à 17, dans lequel des informations numériques transmises par un appareil d'émission sont écrites dans un appareil de support d'enregistrement portable via un appareil de réception, et reproduites par un appareil de reproduction, comprenant :
l'appareil d'émission pouvant être mis en oeuvre pour chiffrer les informations numériques, sur la base d'une clé de chiffrage de distribution, pour générer des premières informations chiffrées, et transmettre les premières informations chiffrées via un réseau ;
l'appareil de réception pouvant être mis en oeuvre pour, dans un état dans lequel l'appareil de support d'enregistrement est connecté à l'appareil de réception, recevoir les premières informations chiffrées via le réseau, et sortir les premières informations chiffrées reçues vers l'appareil de support d'enregistrement ;
l'appareil de support d'enregistrement selon l'une quelconque des revendications 1 à 17;
l'appareil de reproduction pouvant être mis en oeuvre pour, dans un état dans lequel l'appareil de support d'enregistrement auquel les secondes informations chiffrées ont été écrites est connecté à l'appareil de reproduction, (a) lire les secondes informations chiffrées depuis la zone de mémorisation d'informations, (b) lire de manière sûre la clé unique de support, (c) déchiffrer les secondes informations chiffrées lues, sur la base de la clé unique de support, pour générer des informations numériques déchiffrées et (d) reproduire les informations numériques chiffrées.

19. Système de protection d'informations numériques selon la revendication 18, dans lequel
l'appareil d'émission chiffre, comme informations numériques, le contenu d'origine qui est un travail numérique, sur la base d'une clé de distribution, pour générer les premières informations chiffrées, et transmet les premières informations chiffrées générées à l'appareil de réception via le réseau, et
l'appareil de support d'enregistrement obtient les premières informations chiffrées via l'appareil de réception.

20. Système de protection d'informations numériques selon la revendication 19,
dans lequel l'appareil d'émission (a) mémorise à l'avance un contenu d'origine, et une clé de contenu d'origine qui est unique au contenu d'origine, (b) obtient la clé de chiffrage de distribution qui est utilisée dans la distribution de contenu numérique, (c) chiffre le contenu d'origine en utilisant la clé de contenu d'origine pour générer un contenu chiffré, (d) chiffre la clé de contenu d'origine en utilisant la clé de chiffrage de distribution obtenue, pour générer une première clé de contenu chiffré, et (e) transmet les premières informations chiffrées qui incluent le contenu chiffré généré et la première clé de contenu chiffré,
l'appareil de réception reçoit les premières informations chiffrées et sort les premières informations chiffrées reçues,
l'unité de module inviolable (a) mémorise à l'avance la clé de déchiffrage de distribution et la clé unique de support, (b) obtient les premières informations chiffrées sorties, (c) déchiffre la première clé de contenu chiffré en utilisant la clé de déchiffrage de distribution, pour générer une clé de contenu intermédiaire, (d) chiffre la clé de contenu intermédiaire générée en utilisant la clé unique de support, pour générer une seconde clé de contenu chiffré, et (e) écrit les secondes informations chiffrées qui incluent le contenu chiffré obtenu et la seconde clé de contenu chiffré dans la zone de mémorisation d'informations, et
l'appareil de reproduction (a) obtient de manière sûre la clé unique de support depuis l'appareil de support d'enregistrement, (b) lit les secondes informations chiffrées qui incluent le contenu chiffré et la seconde clé de contenu chiffré de la zone de mémorisation d'informations, (c) déchiffre la seconde clé de contenu chiffré en utilisant la clé unique de support obtenue, pour générer une clé de contenu déchiffré, et (d) déchiffre le contenu chiffré lu en utilisant la clé de contenu déchiffré générée, pour générer le contenu déchiffré.

21. Système de protection d'informations numériques selon la revendication 18, dans lequel
l'appareil d'émission chiffre, comme informations numériques, au moins une d'une clé de contenu et d'une condition d'usage, sur la base d'une clé de distribution, pour générer les premières informations chiffrées, et transmet les premières informations chiffrées générées à l'appareil de réception via le réseau, et
l'appareil de support d'enregistrement obtient les premières informations chiffrées via l'appareil de réception.

22. Système de protection d'informations numériques selon l'une quelconque des revendications 1 à 17 composé d'un appareil d'émission qui transmet un travail numérique, d'un appareil de réception qui reçoit le travail numérique transmis via un réseau, et enregistre le travail numérique reçu dans un appareil de support d'enregistrement portable, d'un appareil de reproduction qui reproduit le travail numérique qui est enregistré dans l'appareil de support d'enregistrement, et l'appareil de support d'enregistrement,

23. Appareil de reproduction qui reproduit des informations numériques qui sont transmises par un appareil d'émission via un réseau et un appareil de réception, et écrites dans un appareil de support d'enregistrement, l'appareil d'émission chiffrant les informations numériques sur la base d'une clé de chiffrage de distribution, pour générer des premières informations chiffrées, et transmet les premières informations chiffrées générées via le réseau à l'appareil de réception, dans un état dans lequel l'appareil de support d'enregistrement est connecté à l'appareil de réception,
l'appareil de reproduction comprenant :
l'appareil de support d'enregistrement ;
une unité d'obtention de clé pouvant être mise en oeuvre pour obtenir de manière sûre la clé unique de support depuis l'appareil de support d'enregistrement ;
une unité de lecture pouvant être mise en oeuvre pour lire les secondes informations chiffrées depuis la zone de mémorisation d'informations ; et
une unité de déchiffrage pouvant être mise en oeuvre pour déchiffrer les secondes informations chiffrées lues, sur la base de la clé unique de support, pour générer des informations numériques déchiffrées.

24. Appareil de reproduction selon la revendication 23, dans lequel l'appareil d'émission chiffre, comme informations numériques, un contenu d'origine qui est un travail numérique, pour générer les premières informations chiffrées,
l'unité de déchiffrage déchiffre les secondes informations chiffrées lues, sur la base de la clé unique de support obtenue, pour générer un contenu déchiffré, et
l'appareil de reproduction comprend en outre :
une unité de reproduction pouvant être mise en oeuvre pour reproduire le contenu déchiffré généré.

25. Appareil de reproduction selon la revendication 24,
dans lequel l'appareil d'émission (a) mémorise à l'avance un contenu d'origine et une clé de contenu d'origine qui est unique au contenu d'origine, (b) obtient la clé de chiffrage de distribution qui est utilisée dans la distribution de contenu numérique, (c) chiffre le contenu d'origine en utilisant la clé de contenu d'origine, pour générer un contenu chiffré, (d) chiffre la clé de contenu d'origine en utilisant la clé de chiffrage de distribution obtenue, pour générer une première clé de contenu chiffré et (e) transmet les premières informations chiffrées qui incluent le contenu chiffré généré et la première clé de contenu chiffré,
l'unité de module inviolable (a) mémorise à l'avance la clé de déchiffrage de distribution et la clé unique de support, (b) obtient les premières informations chiffrées sorties, (c) déchiffre la première clé de contenu chiffré en utilisant la clé de déchiffrage de distribution, pour générer une clé de contenu intermédiaire, (d) chiffre la clé de contenu intermédiaire générée en utilisant la clé unique de support, pour générer une seconde clé de contenu chiffré, et (e) écrit les secondes informations chiffrées dans la zone de mémorisation d'informations,
l'unité de lecture lit les secondes informations chiffrées, et
l'unité de déchiffrage déchiffre la seconde clé de contenu chiffré lu en utilisant la clé unique de support obtenue, pour générer une clé de contenu déchiffré, et déchiffre le contenu chiffré lu en utilisant la clé de contenu déchiffré générée pour générer un contenu déchiffré:

26. Appareil de reproduction selon la revendication 25,
dans lequel l'appareil d'émission, en outre, (a) mémorise des informations de condition d'usage qui montre les conditions pour utiliser le travail numérique, et une clé de condition d'usage d'origine qui est unique aux informations de condition d'usage, (b) chiffre la clé de condition d'usage d'origine en utilisant la clé de chiffrage de distribution, pour générer une première clé de condition d'usage chiffrée, (c) chiffre les informations de condition d'usage en utilisant la clé de condition d'usage d'origine, pour générer des premières informations d'usage chiffrées, et (d) transmet la première clé de condition d'usage chiffrée et les premières informations de condition d'usage chiffrées via le réseau à l'appareil de réception,
l'appareil de support d'enregistrement, en outre, (a) obtient via le réseau la première clé de condition d'usage chiffrée et les premières informations de condition d'usage chiffrées, (b) déchiffre la première clé de condition d'usage chiffrée en utilisant la clé de déchiffrage de distribution, pour générer une clé de condition d'usage intermédiaire, (c) déchiffre les premières informations de condition d'usage chiffrées en utilisant la clé de condition d'usage intermédiaire générée, pour générer des informations de condition d'usage intermédiaires, (d) chiffre les informations de condition d'usage intermédiaires, en utilisant la clé unique de support, pour générer des secondes informations de condition d'usage chiffrées et (e) écrit les secondes informations de condition d'usage chiffrées générées dans la zone de mémorisation d'informations,
l'unité de lecture lit, en outre, les secondes informations de condition d'usage chiffrées de la zone de mémorisation d'informations
l'unité de déchiffrage déchiffre, en outre, les secondes informations de condition d'usage chiffrées, sur la base de la clé unique de support, pour générer des informations de condition d'usage déchiffrées, et
l'unité de reproduction juge, en outre, sur la base des informations de condition d'usage déchiffrées, si la reproduction du contenu déchiffré généré est autorisée, et ne reproduit le contenu déchiffré que lorsque la reproduction est jugée être autorisée.

27. Appareil de reproduction selon la revendication 26,
dans lequel les informations de condition d'usage incluent au moins une des informations qui limitent le nombre de fois où le contenu déchiffré est reproduit, des informations qui limitent une période pendant laquelle le contenu déchiffré est reproduit, et des informations qui limitent une durée accumulée de temps où le contenu déchiffré est reproduit, et
l'unité de reproduction juge si la reproduction du contenu déchiffré est autorisée, sur la base d'une ou plusieurs des informations qui limitent le nombre de fois où le contenu déchiffré est reproduit, les informations qui limitent une période pendant laquelle le contenu déchiffré est reproduit, et les informations qui limitent une durée accumulée de temps où le contenu déchiffré est reproduit.

28. Appareil de reproduction selon la revendication 25 comprenant en outre :
une unité d'authentification pouvant être mise en oeuvre pour effectuer une authentification du dispositif mutuel avec l'appareil de support d'enregistrement,
l'unité d'obtention de clé n'obtient l'obtention que lorsque l'authentification est satisfaisante, et
l'unité de lecture ne lit que lorsque l'authentification est satisfaisante.

29. Appareil de reproduction selon la revendication 23, dans lequel
l'appareil d'émission chiffre, comme informations numériques, au moins une d'une clé de contenu et d'une condition d'usage, sur la base d'une clé de distribution, pour générer les premières informations chiffrées, et transmet les premières informations chiffrées générées à l'appareil de réception via le réseau,
l'appareil de support d'enregistrement obtient les premières informations chiffrées via l'appareil de réception, et
l'unité de déchiffrage déchiffre les secondes informations chiffrées lues, sur la base de la clé unique de support obtenue, pour générer les informations numériques déchiffrées qui sont au moins une d'une clé de contenu et d'une condition d'usage.
